# EUROPEAN PATENT APPLICATION

(11) **EP 4 422 307 A1**
(43) Date of publication of application: **28.08.2024**
(21) Application number: 21961079.7
(22) Date of filing: 22.10.2021
(51) Int. Cl.: H04W 72/02

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); HE, Chuanfeng, Dongguan, Guangdong 523860 (CN); XU, Weijie, Dongguan, Guangdong 523860 (CN); ZUO, Zhisong, Dongguan, Guangdong 523860 (CN)
(74) Representative: Taor, Simon Edward William
(86) International application number: PCT/CN2021/125838
(87) International publication number: WO 2023/065336

(57) **Abstract**

A wireless communication method, a terminal device and a network device, which facilitate a reduction in collisions between uplink transmissions performed by zero-power terminals. The method comprises: a terminal device determining, according to first information, a target resource and/or a target frequency point for communications, wherein the first information comprises identification information of the terminal device and/or a user type of the terminal device; and by means of energy harvesting, the terminal device obtains energy for communications.

## Description

### TECHNICAL FIELD

Embodiments of the disclosure relates to the field of communications, and in particular to a wireless communication method, a terminal device, and a network device.

### BACKGROUND

In zero-power communication, a zero-power terminal needs to acquire radio waves sent by a network device, to obtain energy, and then may drive the zero-power terminal to operate. With the development of industry, a number of devices accessed to the network increases sharply, and a number of zero-power devices will also be extremely huge. If multiple terminal devices transmit data to the network device simultaneously, data collision may occur, therefore the network device cannot acquire data of each of the terminal devices. Therefore, how to achieve anti-collision processing of the zero-power terminal is a problem urgently to be solved.

### SUMMARY

The disclosure provides a wireless communication method, a terminal device and a network device, which are beneficial to reduce collision of uplink transmission of the zero-power terminal.

According to a first aspect, there is provided a wireless communication method, the method includes the following operations. A terminal device determines a target resource and/or a target frequency point for communication, according to first information. Here, the first information includes identity (ID) information of the terminal device and/or a user type of the terminal device, and the terminal device obtains energy for communication through power harvesting.

According to a second aspect, there is provided a wireless communication method, the method includes the following operations. A network device determines a target resource and/or a target frequency point for communication performed by a terminal device, according to first information, here the first information includes ID information of the terminal device and/or a user type of the terminal device, and the terminal device obtains energy for communication through power harvesting.

According to a third aspect, there is provided a terminal device, the terminal device is configured to execute the method in the above first aspect or various implementations thereof.

Specifically, the terminal device includes a functional module configured to execute the method in the above first aspect or various implementations thereof.

According to a fourth aspect, there is provided a network device, the network device is configured to execute the method in the above second aspect or various implementations thereof.

Specifically, the network device includes a functional module configured to execute the method in the above second aspect or various implementations thereof.

According to a fifth aspect, there is provided a terminal device, the terminal device includes a processor and a memory. The memory is configured to store a computer program, and the processor is configured to call and run the computer program stored in the memory, to execute the method in the above first aspect or various implementations thereof.

According to a sixth aspect, there is provided a network device, the network device includes a processor and a memory. The memory is configured to store a computer program, and the processor is configured to call and run the computer program stored in the memory, to execute the method in the above second aspect or various implementations thereof.

According to a seventh aspect, there is provided a chip, the chip is configured to implement the method in any one of the above first and second aspects or various implementations thereof.

Specifically, the chip includes a processor configured to call and run a computer program from a memory, so that a device installed with the apparatus executes the method in any one of the above first and second aspects or various implementations thereof.

According to an eighth aspect, there is provided a computer-readable storage medium, the computer-readable storage medium is configured to store a computer program, the computer program enables a computer to execute the method in any one of the above first and second aspects or various implementations thereof.

According to a ninth aspect, there is provided a computer program product, the computer program product includes computer program instructions, the computer program instructions enable a computer to execute the method in any one of the above first and second aspects or various implementations thereof.

According to a tenth aspect, there is provided a computer program, the computer program enables a computer to execute the method in any one of the above first and second aspects or various implementations thereof when the computer program is run on the computer.

Through the above technical solutions, the terminal device determines the target resource and/or the target frequency point for communication, according to the ID information or the user type, which is beneficial to ensure that terminal devices with different IDs or different user types use different resources for communication, and/or use different frequency points to receive the energy supply signal, therefore a collision problem of uplink transmission of the terminal device may be reduced.

### BRIEF DESCRIPTION OF THE DRAWINGS

FIG. 1 is a schematic diagram of an architecture of a communication system provided in an embodiment of the disclosure.
FIG. 2 is a schematic diagram of a zero-power communication system according to an example of the disclosure.
FIG. 3 is a principle diagram of power harvesting according to an embodiment of the disclosure.
FIG. 4 is a principle diagram of back scattering communication according to an embodiment of the disclosure.
FIG. 5 is a circuit principle diagram of resistive load modulation according to an embodiment of the disclosure.
FIG. 6 is a schematic diagram of a wireless communication method provided according to an embodiment of the disclosure.
FIG. 7 is a schematic diagram of correspondences between an energy supply signal frequency point and a reflected signal frequency point according to an embodiment of the disclosure.
FIG. 8 is a schematic diagram of a mode of determining a user group to which a terminal device belongs according to an embodiment of the disclosure.
FIG. 9 is a schematic diagram of a mode of determining a user group to which a terminal device belongs according to another embodiment of the disclosure.
FIG. 10 is a schematic diagram of a mode of determining a user group to which a terminal device belongs according to yet another embodiment of the disclosure.
FIG. 11 is a schematic diagram of a mode of determining a user group to which a terminal device belongs according to yet another embodiment of the disclosure.
FIG. 12 is a schematic diagram of a mapping relationship between a user group and a frequency domain resource group according to an embodiment of the disclosure.
FIG. 13 is a schematic diagram of a mapping relationship between a user group and a frequency domain resource group according to another embodiment of the disclosure.
FIG. 14 is a schematic diagram of a mapping relationship between a user group and a time domain resource group according to an embodiment of the disclosure.
FIG. 15 is a schematic diagram of a mapping relationship between a user group and a time domain resource group according to another embodiment of the disclosure.
FIG. 16 is a schematic diagram of a resource unit according to an embodiment of the disclosure.
FIG. 17 is a schematic diagram of a mapping relationship between a user group and a time-frequency domain resource group according to an embodiment of the disclosure.
FIG. 18 is a schematic diagram of another wireless communication method provided according to an embodiment of the disclosure.
FIG. 19 is a schematic block diagram of a terminal device provided according to an embodiment of the disclosure.
FIG. 20 is a schematic block diagram of a network device provided according to an embodiment of the disclosure.
FIG. 21 is a schematic block diagram of a communication device provided according to an embodiment of the disclosure.
FIG. 22 is a schematic block diagram of a chip provided according to an embodiment of the disclosure.
FIG. 23 is a schematic block diagram of a communication system provided according to an embodiment of the disclosure.

### DETAILED DESCRIPTION

The technical solutions in the embodiments of the disclosure will be described below with reference to the drawings in the embodiments of the disclosure. It is apparent that the described embodiments are part of the embodiments of the disclosure, rather than all of the embodiments. Based on the embodiments in the disclosure, all other embodiments obtained by those of ordinary skill in the art without paying any creative work fall within the scope of protection of the disclosure.

The technical solutions of the embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, a LTE-based access to unlicensed spectrum (LTE-U) system, a NR-based access to unlicensed spectrum (NR-U) system, a Non-Terrestrial Networks (NTN) system, a Universal Mobile Telecommunication System (UMTS), a Wireless Local Area Network (WLAN), Wireless Fidelity (WiFi), a 5th-Generation (5G) system, a cellular Internet of Things (IoT) system, a cellular passive IoT system, or other communication systems, etc.

In general, a number of connections supported by a traditional communication system is limited and easy to be achieved. However, with the development of communication technologies, a mobile communication system will not only support traditional communication, but also support for example Device to Device (D2D) communication, Machine to Machine (M2M) communication, Machine Type Communication (MTC), Vehicle to Vehicle (V2V) communication, or Vehicle to every thing (V2X) communication, etc. The embodiments of the disclosure may also be applied to these communication systems.

Optionally, the communication system in the embodiments of the disclosure may be applied to a Carrier Aggregation (CA) scenario, or may be applied to a Dual Connectivity (DC) scenario, or may be applied to a Standalone (SA) networking scenario.

Optionally, the communication system in the embodiments of the disclosure may be applied to an unlicensed spectrum, the unlicensed spectrum may also be considered as a shared spectrum; or, the communication system in the embodiments of the disclosure may also be applied to a licensed spectrum, the licensed spectrum may also be considered as a non-shared spectrum.

The embodiments of the disclosure describe various embodiments in combination with a network device and a terminal device, the terminal device may also be referred to as a User Equipment (UE), an access terminal, a user unit, a user station, a mobile station, a mobile platform, a remote station, a remote terminal, a mobile device, a user terminal, a terminal, a wireless communication device, a user agent, or a user device, etc.

In the embodiments of the disclosure, the network device may be a device configured to communicate with the mobile device, and the network device may be an Access Point (AP) in WLAN, a Base Transceiver Station (BTS) in GSM or CDMA, or may be a NodeB (NB) in WCDMA, or may be an evolutional Node B (eNB or eNodeB) in LTE, or a relay station or AP, or a vehicle-mounted device, a wearable device, a network device (gNB) in an NR network, or a network device in a cellular IoT, or a network device in a cellular passive IoT, or a network device in a future evolutional Public Land Mobile Network (PLMN) network, or a network device in a NTN network, etc.

As an example rather than limitation, in the embodiments of the disclosure, the network device may have mobile characteristics, for example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station arranged at positions such as land, water, etc.

In the embodiments of the disclosure, the network device may provide services for a cell, the terminal device communicates with the network device through transmission resources (such as frequency domain resources, or spectrum resources) used by the cell, the cell may be a cell corresponding to the network device (such as a base station), and the cell may belong to a macro base station, or may belong to a base station corresponding to a small cell. Here, the small cell may include a metro cell, a micro cell, a pico cell, a femto cell, etc. These small cells have characteristics of small coverage and low transmission power, and are suitable to provide high-speed data transmission services.

The terminal device may be a station (ST) in WLAN, and may be a cellular phone, a cordless phone, a Session Initiation Protocol (SIP) phone, a Wireless Local Loop (WLL) station, a Personal Digital Assistant (PDA) device, a hand-held device with a wireless communication function, a computing device, or other processing devices connected to a wireless modem, a vehicle-mounted device, a wearable device, a next-generation communication system such as a terminal device in the NR network, or a terminal device in the future evolutional PLMN network, a terminal device in the cellular IoT, a terminal device in the cellular passive IoT, etc.

In the embodiments of the disclosure, the terminal device may be deployed on land, including that the terminal device is deployed indoor or outdoor, hand-held, wearable or vehicle-mounted; or, the terminal device may be deployed in water (such as a ship, etc.); or, the terminal device may be deployed in the air (such as an aircraft, a balloon, a satellite, etc.).

In the embodiments of the disclosure, the terminal device may be a mobile phone, a tablet computer (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

As an example rather than limitation, in the embodiments of the disclosure, the terminal device may also be a wearable device. The wearable device may also be referred to as a wearable smart device, which is a generic term for wearable devices developed by applying wearable technologies to intelligently design daily worn items, such as glasses, gloves, watches, clothes, shoes, etc. The wearable device is a portable device which is directly worn on the body or integrated into the user's clothes or accessories. The wearable device is not only a hardware device, but also achieves powerful functions through software support, data interaction and cloud interaction. Generalized wearable smart devices include: devices with full functions and large sizes, which may achieve complete or partial functions without relying on smart phones, such as smart watches, or smart glasses, or the like; and devices which focus on only a certain type of application functions, and need to be used in cooperation with other devices such as smart phones, such as various smart bracelets, smart jewelry or the like for monitoring physical signs.

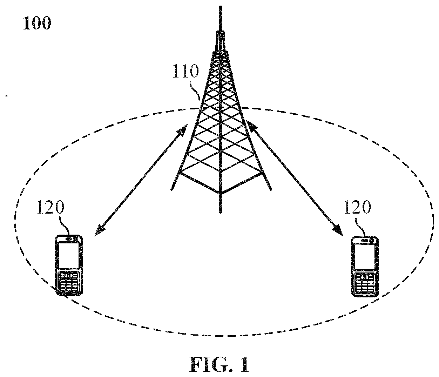

Exemplarily, a communication system 100 to which the embodiments of the disclosure are applied is shown in FIG. 1. The communication system 100 may include a network device 110, and the network device 110 may be a device communicating with a terminal device 120 (or referred to as a communication terminal, a terminal). The network device 110 may provide communication coverage for a specific geographical area, and may communicate with terminal devices located in the coverage area.

FIG. 1 exemplarily shows one network device and two terminal devices. Optionally, the communication system 100 may include multiple network devices, and other numbers of terminal devices may be included in coverage of each of the network devices, which are not limited in the embodiments of the disclosure.

Optionally, the communication system 100 may further include other network entities such as a network controller, a Mobility Management Entity (MME), or the like, which are not limited in the embodiments of the disclosure.

It should be understood that in the embodiments of the disclosure, a device with a communication function in the network/system may be referred to as a communication device. Taking the communication system 100 shown in FIG. 1 as an example, the communication device may include a network device 110 and a terminal device 120 with communication functions, and the network device 110 and the terminal device 120 may be specific devices described as above, which are not elaborated here. The communication device may further include other devices in the communication system 100, such as a network controller, MME or other network entities, which are not limited in the embodiments of the disclosure.

It should be understood that terms "system" and "network" here are often used interchangeably in the context. A term "and/or" here is intended to describe an association relationship of associated objects, and indicates that there may be three relationships. For example, A and/or B may indicate three situations: A exists alone, A and B exist simultaneously, and B exists alone. Furthermore, a character "/" here usually indicates that anterior and posterior associated objects are in a "or" relationship.

It should be understood that "indication" mentioned in the embodiments of the disclosure may be a direct indication, or may be an indirect indication, or may mean that there is an association relationship. For example, A indicates B, which may mean that A directly indicates B, for example, B may be acquired through A; or, may mean that A indirectly indicates B, for example, A indicates C, and B may be acquired through C; or, may mean that there is an association relationship between A and B.

In descriptions of the embodiments of the disclosure, a term "corresponding" may indicate that there are direct or indirect correspondences between two items; or, may indicate that there is an association relationship between two items; or, may be in a relationship such as indicating and indicated, configuring and configured, etc.

In the embodiments of the disclosure, "predefined" may be implemented by pre-saving corresponding codes, tables or other modes which may be used to indicate relevant information in a device (for example, including the terminal device and the network device), specific implementations thereof are not limited in the disclosure. For example, "predefined" may refer to "defined in a protocol".

In the embodiments of the disclosure, the "protocol" may refer to a standard protocol in the communication field, and for example, may include a LTE protocol, a NR protocol, and relevant protocols applied to a future communication system, which are not limited in the disclosure.

In order to facilitate understanding the technical solutions of the embodiments of the disclosure, relevant technologies of the disclosure are described.

### 1. Zero-power communication

The zero-power communication uses power harvesting and back scattering communication technologies. A zero-power communication network is composed of a network device and a zero-power terminal.

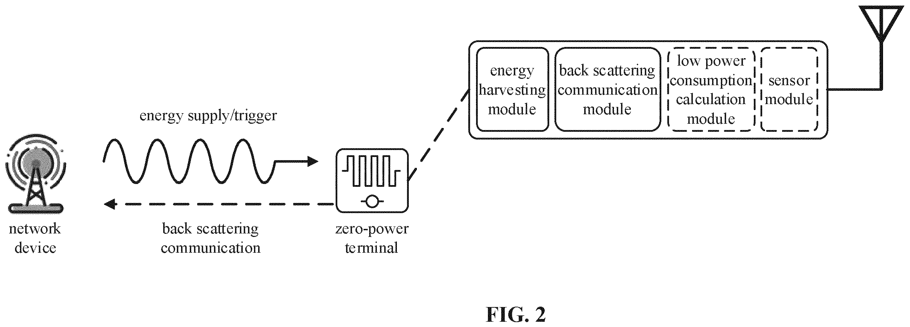

As shown in FIG. 2, the network device is configured to send a wireless energy supply signal and a downlink communication signal to the zero-power terminal, and receive a back scattering signal from the zero-power terminal. A basic zero-power terminal includes a power harvesting module, a back scattering communication module, and a low-power calculation module. Furthermore, the zero-power terminal may also be provided with a memory or a sensor, to store some basic information (such as item identity (ID), etc.) or acquire sensing data such as ambient temperature, ambient humidity, etc.

Key technologies in zero-power communication are described below.

### 1. Radio Frequency (RF) power harvesting

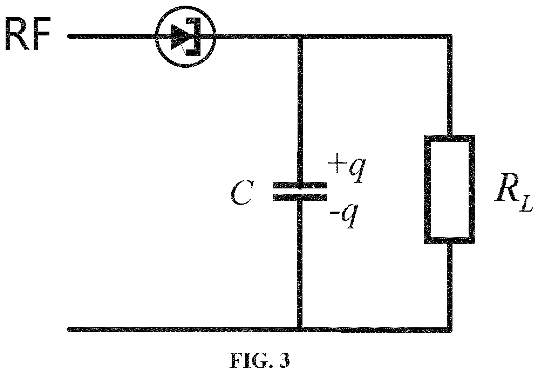

As shown in FIG. 3, the power harvesting module (or a RF power harvesting module) achieves acquisition of energies of space electromagnetic waves based on a principle of electromagnetic induction, and then obtains energy required to drive the zero-power terminal to operate, for example, to drive a low-power demodulation and modulation module, sensor and memory reading, etc. Therefore, the zero-power terminal does not require traditional batteries.

### 2. Back scattering

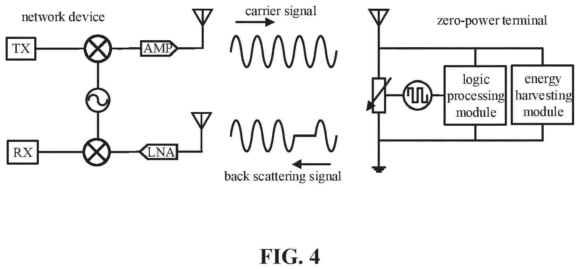

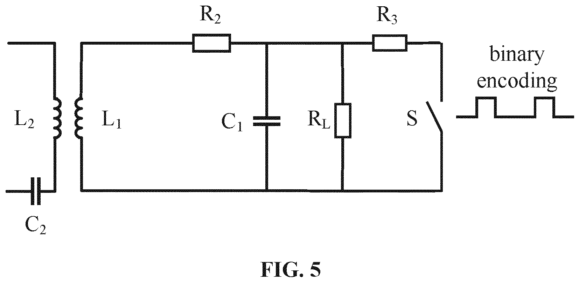

As shown in FIG. 4, the zero-power terminal receives a carrier signal sent by the network device, modulates the carrier signal, loads to-be-sent information, and radiates the modulated signal from an antenna. This information transmission process is referred to as back scattering communication. Back scattering is inseparable from a load modulation function. Load modulation adjusts and controls circuit parameters of an oscillation circuit of the zero-power terminal according to a beat of a data stream, so that parameters such as impedance of an electronic tag or the like change accordingly, thereby completing a modulation process. Load modulation technologies mainly include two modes, i.e., resistive load modulation and capacitive load modulation. In the resistive load modulation, the load is connected in parallel with a resistor, and the resistor is switched on or off based on control of a binary data stream, as shown in FIG. 5. On and off of the resistor may induce variation of voltage of the circuit, so that Amplitude Shift Keying (ASK) modulation is achieved, that is, modulation and transmission of the signal are achieved by adjusting an amplitude of the back scattering signal of the zero-power terminal. Similarly, in the capacitive load modulation, variation of resonant frequency of the circuit may be achieved by switching on and off the capacitor, so that Frequency Shift Keying (FSK) modulation is achieved, that is, modulation and transmission of the signal are achieved by adjusting an operation frequency of the back scattering signal of the zero-power terminal

It may be seen that the zero-power terminal performs information modulation on an incoming signal by way of load modulation, thereby achieving a back scattering communication process. Therefore, the zero-power terminal has significant advantages as follows.
(1) The terminal does not actively transmit signals, thus does not require complex RF links, such as Power Amplifier (PA), RF filter, etc.
(2) The terminal does not need to actively generate high-frequency signals, thus does not require high-frequency crystal oscillators.
(3) With back scattering communication, signal transmission of the terminal does not need to consume energy of the terminal itself.

### 3. Encoding technology

Data transmitted by the electronic tag may use different forms of codes to represent binary "1" and "0". A Radio Frequency Identification (RFID) system typically uses one of the following encoding methods: Non Return to Zero (NRZ) encoding, Manchester encoding, Unipolar Return to Zero (Unipolar RZ) encoding, Differential Biphase (DBP) encoding, differential encoding, Pulse Interval Encoding (PIE), bidirectional spatial encoding (FM0), Miller encoding and differential encoding, etc. In vernacular terms, different pulse signals are used to represent 0 and 1.

In some scenarios, based on energy sources and usage modes of zero-power terminals, the zero-power terminals may be divided into the following types.

### 1. Passive zero-power terminal

The zero-power terminal (such as a tag of the RFID system) does not require a built-in battery. When the zero-power terminal is close to the network device (such as a reader of the RFID system), the zero-power terminal is within a near-field range formed by radiation of an antenna of the network device. Therefore, an antenna of the zero-power terminal generates an induced current through electromagnetic induction, and the induced current drives low-power chip and circuit of the zero-power terminal. Operations such as signal demodulation of a forward link, signal modulation of a reverse link, or the like are achieved. With regard to a back scattering link, the zero-power terminal uses a back scattering implementation to transmit signals.

It may be seen that with regard to the passive zero-power terminal, no matter the forward link or the reverse link, the passive zero-power terminal does not require the built-in battery to drive it, and is a zero-power terminal in the true sense.

The passive zero-power terminal does not require the battery, and has very-simple RF circuit and baseband circuit, for example, it does not require devices such as Low Noise Amplifier (LNA), PA, crystal oscillator, Analog-to-Digital Converter (ADC) or the like, thus has many advantages such as small volume, light weight, very cheap price, long service life, etc.

### 2. Semi-passive zero-power terminal

The semi-passive zero-power terminal itself does not mount a conventional battery therein, however, it may use a RF power harvesting module to acquire radio wave energy, and store the acquired energy in an energy storage unit (such as a capacitor). After obtaining the energy, the energy storage unit may drive low-power chip and circuit of the zero-power terminal. Operations such as signal demodulation of a forward link, signal modulation of a reverse link, or the like are achieved. With regard to a back scattering link, the zero-power terminal uses a back scattering implementation to transmit signals.

It may be seen that with regard to the semi-passive zero-power terminal, no matter the forward link or the reverse link, the semi-passive zero-power terminal does not require the built-in battery to drive it. Although the energy stored in the capacitor is used during operation, the energy comes from radio energy acquired by the power harvesting module, thus the semi-passive zero-power terminal is also a zero-power terminal in the true sense.

The semi-passive zero-power terminal inherits many advantages of the passive zero-power terminal, thus has many advantages such as small volume, light weight, very cheap price, long service life, etc.

### 3. Active zero-power terminal

The zero-power terminal used in some scenarios may also be the active zero-power terminal, and such terminal may have a built-in battery. The battery is configured to drive low-power chip and circuit of the zero-power terminal. Operations such as signal demodulation of a forward link, signal modulation of a reverse link, or the like are achieved. However, with regard to a back scattering link, the zero-power terminal uses a back scattering implementation to transmit signals. Therefore, zero-power consumption of this type of terminal is mainly reflected in a fact that signal transmission of the reverse link does not require power of the terminal itself, instead, it is achieved by using back scattering.

### 2. Cellular passive IoT

With the increase of 5G industry applications, there are more and more types of connected objects and application scenarios, and there will be a higher requirement on cost and power consumption of communication terminals. Application of battery-free and low-cost passive IoT devices has become a key technology of the cellular IoT, to enrich types and numbers of terminals linked to 5G network and truly achieve interconnection of everything. The passive loT device may be based on zero-power communication technologies, such as RFID technology, and may be extended on this basis, to be applicable to the cellular loT.

In zero-power communication, the zero-power terminal needs to acquire radio waves sent by the network device, to obtain energy, and then may drive the zero-power terminal itself to operate. With the development of industry, a number of devices accessed to the network increases sharply, and a number of zero-power devices applied in the cellular IoT system will also be extremely huge. If multiple terminal devices transmit data to the network device simultaneously, data collision may occur, therefore the network device cannot acquire data of each of the terminal devices. Therefore, how to achieve anti-collision processing of the zero-power terminal is a problem urgently to be solved.

In order to facilitate understanding the technical solutions of the embodiments of the disclosure, the technical solutions of the disclosure are described in detail below through specific embodiments. The above relevant technologies used as optional solutions may be arbitrarily combined with the technical solutions of the embodiments of the disclosure, all of which fall within the scope of protection of the embodiments of the disclosure. The embodiments of the disclosure include at least a part of the following contents.

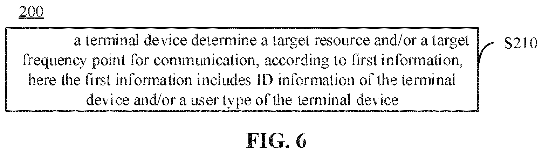

FIG. 6 is a schematic diagram of a wireless communication method 200 according to an embodiment of the disclosure. As shown in FIG. 6, the method 200 includes at least a part of the following contents.

At S210, a terminal device determines a target resource and/or a target frequency point for communication, according to first information.

In some embodiments, the first information includes ID information of the terminal device and/or a user type of the terminal device.

In the embodiments of the disclosure, the terminal device obtains energy through power harvesting, to perform communication.

It should be understood that the disclosure does not limit specific modes of the terminal device obtaining energy through power harvesting. As an example rather than limitation, the terminal device may obtain energy through wireless energy supply modes such as an energy supply signal, solar energy, pressure or temperature, etc. Descriptions are made below by an example of the terminal device obtaining energy through the energy supply signal, however, the disclosure is not limited thereto.

In some embodiments, the energy supply signal is sent by a network device, or may be sent by a dedicated energy supply node, or may be sent by an active terminal, the active terminal may communicate with the network device while it may not be based on back scattering.

Optionally, the energy supply signal may be sent continuously or intermittently, and the terminal device acquires energy based on the energy supply signal, and after obtaining enough energy, the terminal device may perform corresponding communication processes, such as measurement, sending signals, sending channels, receiving signals, receiving channels, etc.

In some embodiments, the terminal device is configured with a power harvesting module configured to acquire energy, such as collect energy from radio waves, solar energy or the like, and further store the obtained energy in an energy storage unit. After obtaining enough energy, the energy storage unit may drive chip and circuit inside the terminal device to operate, to perform operations such as signal demodulation of a forward link, signal modulation of a reverse link, etc.

In some embodiments, the terminal device may be a zero-power terminal, such as an electronic tag.

It should be understood that the embodiments of the disclosure do not limit specific modes of the terminal device sending data to the network device. For example, the terminal device may communicate with the network device in a zero-power communication mode. The zero-power communication mode may include a back scattering communication mode, or may include other modes used by the zero-power terminal to perform communication and introduced in evolution of standards, however, the disclosure is not limited thereto.

It should be noted that in the embodiments of the disclosure, when the terminal device performs communication in a back scattering mode and acquires energy through the energy supply signal, the energy supply signal and a signal used by the terminal device to generate a back scattering signal (or, referred to as a carrier signal) may be the same signal, or may be different signals. The energy supply signal and the carrier signal may be sent by the same device, or may be sent by different devices, which are not limited in the embodiments of the disclosure.

In some embodiments of the disclosure, the terminal device may receive the energy supply signal sent by the network device at one frequency point, multiple frequency points or all frequency points, to obtain energy for communication. The frequency point here may be a frequency point of the energy supply signal.

Optionally, the terminal device receiving the energy supply signal sent by the network device at one frequency point, multiple frequency points or all frequency points, is related to capability of the terminal device.

In some embodiments of the disclosure, the terminal device may perform back scattering communication at one or more frequency points. The frequency point here may be a back scattering frequency point.

Optionally, the terminal device performing back scattering communication at one or more frequency points, is related to capability of the terminal device.

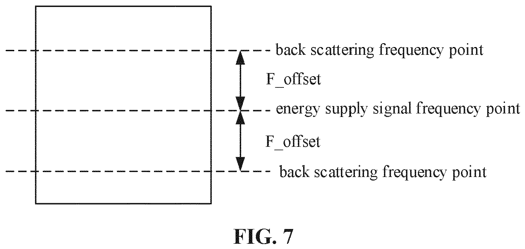

In some embodiments of the disclosure, the back scattering signal is generated by the energy supply signal, then the back scattering frequency point has a certain frequency offset from the frequency point of the energy supply signal. As shown in FIG. 7, the back scattering frequency point has a frequency offset (F_offset) from the frequency point of the energy supply signal. For example, an absolute value of a difference between the back scattering frequency point and the frequency point of the energy supply signal is the frequency offset F_offset.

As an example, a difference obtained by subtracting the back scattering frequency point from the frequency point of the energy supply signal is the frequency offset F_offset.

As another example, a difference obtained by subtracting the frequency point of the energy supply signal from the back scattering frequency point is the frequency offset F_offset.

As yet another example, the frequency point of the energy supply signal corresponds to a set of back scattering frequency points, the set of back scattering frequency points is symmetrical to the frequency point of the energy supply signal, and a frequency offset of the set of back scattering frequency points relative to the frequency point of the energy supply signal is F_offset.

In some other embodiments of the disclosure, the back scattering signal is generated by a separate carrier signal. In this case, the back scattering frequency point is relevant to a frequency point of the carrier signal, and the back scattering frequency point may be irrelevant to the frequency point of the energy supply signal.

Optionally, the ID information (or, referred to as user ID) of the terminal device may be configured to uniquely identify the terminal device.

For example, in logistics management, the ID information of the terminal device may be barcode information or two-dimensional code information of commodities, etc.

Optionally, the user type of the terminal device is classified according to ID information, function or capability of the terminal device, etc.

For example, in logistics management, the user type of the terminal device may be classification information of commodities, such as food, home appliances, articles for daily use, sports products, etc.

In some embodiments of the disclosure, the target resource may include any resource for communication, for example, includes but is not limited to a target time domain resource and/or a target frequency domain resource.

It should be understood that the embodiments of the disclosure do not limit a number of frequency domain resources used by the terminal device to perform communication, for example, the target frequency domain resource may include one or more frequency domain resources.

Optionally, one frequency domain resource may be a minimum frequency domain resource unit required by the terminal device to perform back scattering communication.

It should be understood that the embodiments of the disclosure do not limit a unit of the minimum frequency domain resource unit, for example, it may be one or more Resource Blocks (RBs), or may be one or more subcarriers.

It should be understood that the embodiments of the disclosure do not limit a number of time domain resources used by the terminal device to perform communication, for example, the target time domain resource may include one or more time domain resources.

Optionally, one time domain resource may be a minimum time domain resource unit required by the terminal device to perform back scattering communication.

It should be understood that the embodiments of the disclosure do not limit a unit of the minimum time domain resource unit, for example, it may be a slot, a subframe, millisecond (ms), second (s), etc.

In some embodiments of the disclosure, the terminal device receives the energy supply signal from the network device, and uses the energy supply signal to perform back scattering communication. In this case, the target frequency point used by the terminal device to perform communication is relevant to the frequency point of the energy supply signal.

In some embodiments, the target frequency point used by the terminal device to perform communication may include one frequency point, or may include multiple frequency points, which are not limited in the disclosure.

Optionally, if the target frequency point includes one frequency point, the one frequency point may correspond to a frequency point of one energy supply signal, for example, may be determined according to the frequency point of the energy supply signal and a frequency domain offset.

Optionally, if the target frequency point includes multiple frequency points, multiple frequency points may correspond to a frequency point of one energy supply signal, or may correspond to frequency points of multiple energy supply signals.

For example, multiple frequency points may be determined according to the frequency point of one energy supply signal and multiple frequency domain offsets, for example, the frequency point of one energy supply signal is shifted by multiple frequency domain offsets respectively, to obtain multiple frequency points.

In another example, multiple frequency points may be determined according to the frequency points of multiple energy supply signals and one frequency domain offset, for example, each of the frequency points of multiple energy supply signals is shifted by the one frequency domain offset, to obtain multiple frequency points.

In another example, multiple frequency points may be determined according to the frequency points of multiple energy supply signals and multiple frequency domain offsets, for example, the frequency point of each energy supply signal from the frequency points of multiple energy supply signals may be shifted by multiple frequency domain offsets respectively, to obtain multiple frequency points.

In some embodiments of the disclosure, the target frequency domain resource may correspond to a frequency point of one energy supply signal, or may correspond to frequency points of multiple energy supply signals.

For example, when the target frequency domain resource includes one frequency domain resource, the one frequency domain resource corresponds to the frequency point of one energy supply signal.

As an example, the one frequency domain resource may be determined according to the frequency point of one energy supply signal and a frequency domain offset.

In another example, when the target frequency domain resource includes multiple frequency domain resources, multiple frequency domain resources may correspond to a frequency point of one energy supply signal, or may correspond to frequency points of multiple energy supply signals.

As an example, multiple frequency domain resources may be determined according to the frequency point of one energy supply signal and multiple frequency domain offsets, for example, the frequency point of one energy supply signal is shifted by multiple frequency domain offsets respectively, to obtain multiple frequency domain resources.

In another example, multiple frequency domain resources may be determined according to the frequency points of multiple energy supply signals and one frequency domain offset, for example, each of the frequency points of multiple energy supply signals is shifted by the one frequency domain offset, to obtain multiple frequency domain resources.

In another example, multiple frequency domain resources may be determined according to the frequency points of multiple energy supply signals and multiple frequency domain offsets, for example, the frequency point of each energy supply signal from the frequency points of multiple energy supply signals may be shifted by multiple frequency domain offsets respectively, to obtain multiple frequency domain resources.

In some embodiments of the disclosure, S210 includes the following operations.

A user group to which the terminal device belongs is determined according to the ID information of the terminal device.

The target resource and/or the target frequency point, is determined according to the user group to which the terminal device belongs.

Optionally, in the embodiments of the disclosure, terminal devices in the same user group correspond to the same available resources.

Therefore, in the embodiments of the disclosure, terminal devices are grouped, so that terminal devices in different user groups use different resources to perform communication, which is beneficial to reduce collision of uplink transmission.

Optionally, in the embodiments of the disclosure, ID information of all the terminal devices belonging to the same user group meet the same constraint condition. In other words, ID information of the terminal devices belonging to the same user group meet user ID constraint corresponding to the user group.

Therefore, the terminal device may determine the user group, to which the terminal device belongs, according to constraint conditions met by the ID information of the terminal device.

It should be understood that the embodiments of the disclosure do not limit specific modes of dividing user groups according to the ID information of the terminal device, as long as the terminal device and the network device determine the user group to which the terminal device belongs in a consistent mode, and further determine the target resource and/or the target frequency point according to the user group, and then the terminal device sends data based on the target resource and/or the target frequency point, and the network device receives data based on the target resource and/or the target frequency point.

In some embodiments, the ID information of the terminal device includes multiple bits, and the user group, to which the terminal device belongs, may be determined according to values of feature bits of multiple bits. That is, values of feature bits of ID information of all the terminal devices in the same user group meet the same constraint condition. Therefore, the terminal device may determine the user group, to which the terminal device belongs, according to the value of the feature bit of the ID information in combination with the constraint condition of the user group.

It should be understood that in the embodiments of the disclosure, the terminal device may directly determine the user group, to which the terminal device belongs, according to the value of the feature bit; or, may process the value of the feature bit, such as modulo 2 addition (or, XOR), and determine the user group, to which the terminal device belongs, according to the processed result, which are not limited in the disclosure.

In some implementations, the feature bit includes part or all bits in the ID information of the terminal device.

Optionally, in a case that the feature bit includes multiple bits, multiple bits included in the feature bit may be continuous or discontinuous.

In some embodiments, different values of the feature bit correspond to different user groups. Therefore, the terminal device may directly determine the user group, to which the terminal device belongs, according to the value of the feature bit of the ID information.

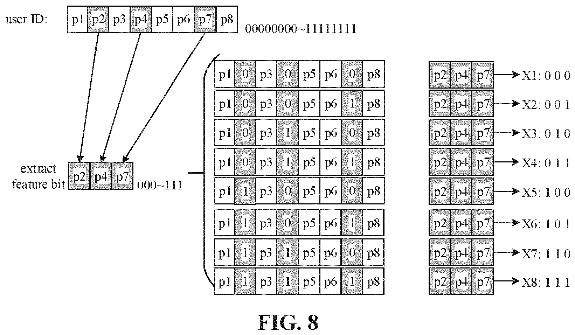

For example, as shown in FIG. 8, the ID information of the terminal device includes eight bits (p1~p8) of which a value range is 00000000-11111111, and p2, p4, p7 in the eight bits may be taken as the feature bit, and the user group to which the terminal device belongs is determined according to values of the three bits. A value set after combining the three bits in an order (p2p4p7) is {X1, X2, X3, X4, X5, X6, X7, X8}, X1 is 000, X2 is 001, X3 is 010, X4 is 011, X5 is 100, X6 is 101, X7 is 110, and X8 is 111.

As an example, as shown in FIG. 8, values {X1, X2, X3, X4, X5, X6, X7, X8} of the feature bit (p2p4p7) correspond to {user group 1, user group 2,..., user group 8} respectively. That is, user group k corresponds to user ID constraint k, the user ID constraint k may be expressed as: V=k-1, k=1, 2,..., 8, V represents the value of the feature bit (p2p4p7) of ID information of a terminal device in user group k.

In some other embodiments, different value ranges of the feature bit correspond to different user groups. Therefore, the terminal device may determine the user group, to which the terminal device belongs, according to a range to which the value of the feature bit of the ID information belongs.

In other words, different thresholds of the value of the feature bit may correspond to different user groups. Therefore, the terminal device may determine the user group, to which the terminal device belongs, according to a threshold corresponding to the value of the feature bit of the ID information.

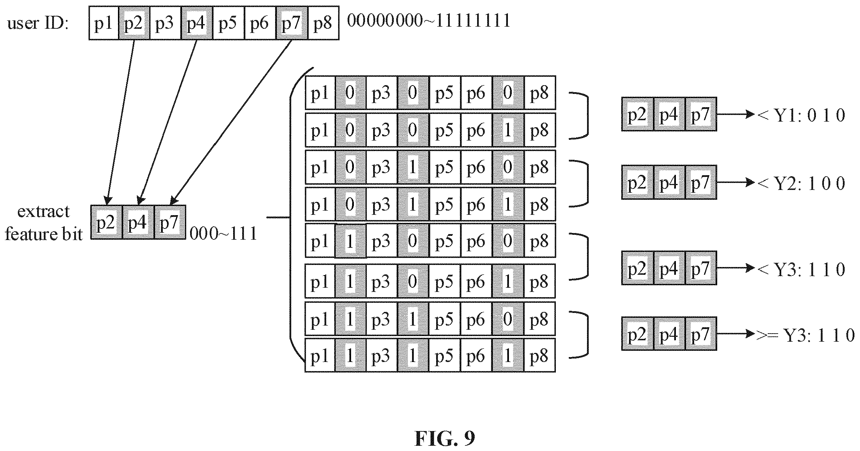

For example, as shown in FIG. 9, the ID information of the terminal device includes eight bits (p1~p8) of which a value range is 00000000~11111111, and p2, p4, p7 in the eight bits may be taken as a feature bit, and a corresponding user group is further determined according to a value after combining the three bits in an order (p2p4p7) in combination with multiple thresholds (such as three thresholds). The three thresholds are {Y1, Y2, Y3}, Y1 is 010, Y2 is 100, and Y3 is 110.

As an example, as shown in FIG. 9, different value ranges of the feature bit (p2p4p7) are V<Y1, Y1≤V<Y2, Y2≤V<Y3, V≥Y3 which correspond to {user group 1, user group 2, user group 3, user group 4} respectively, V represents the value of the feature bit p2p4p7. That is, user group 1 corresponds to user ID constraint 1: V<Y1; user group 2 corresponds to user ID constraint 2: Y1≤U<Y2; user group 3 corresponds to user ID constraint 3: Y2≤V<Y3; user group 4 corresponds to user ID constraint 4: V≥Y3.

As another example, different value ranges of the feature bit (p2p4p7) are V≤Y1, Y1<V≤Y2, Y2<V≤Y3, V>Y3 which correspond to {user group 1, user group 2, user group 3, user group 4} respectively, V represents the value of the feature bit p2p4p7. That is, user group 1 corresponds to user ID constraint 1: V≤Y1; user group 2 corresponds to user ID constraint 2: Y1<V≤Y2; user group 3 corresponds to user ID constraint 3: Y2<V≤Y3; user group 4 corresponds to user ID constraint 4: V>Y3.

In some other embodiments, the ID information of the terminal device includes multiple bits, part or all of multiple bits may be divided into multiple bit groups, a feature bit of each bit group is further extracted, and the user group to which the terminal device belongs is determined according to the feature bit of each bit group.

Optionally, bits included in each bit group may be continuous or discontinuous, and a number of bits included in each bit group may be the same or different.

It should be understood that the embodiments of the disclosure do not limit specific modes of extracting the feature bit from each feature group. As an example, extracting the feature bit of each bit group may include: extracting some bits from each bit group as the feature bit; or, each bit group may be processed, such as modulo 2 addition, to obtain the feature bit of each bit group.

Optionally, after extracting the feature bit of each bit group, feature bits of multiple bit groups are combined to obtain a target feature bit of the ID information of the terminal device, and the user group, to which the terminal device belongs, may be further determined according to the target feature bit. For example, the user group to which the terminal device belongs is determined according to the target feature bit and the constraint condition corresponding to the user group.

It should be understood that in the embodiments of the disclosure, the user group, to which the terminal device belongs, may be directly determined according to a value of the target feature bit, or the value of the target feature bit may be processed, such as modulo 2 addition, and the user group to which the terminal device belongs is determined according to the processed result, which are not limited in the disclosure.

As an example, different values of the target feature bit correspond to different user groups. Therefore, the terminal device may directly determine the user group, to which the terminal device belongs, according to the value of the target feature bit of the ID information.

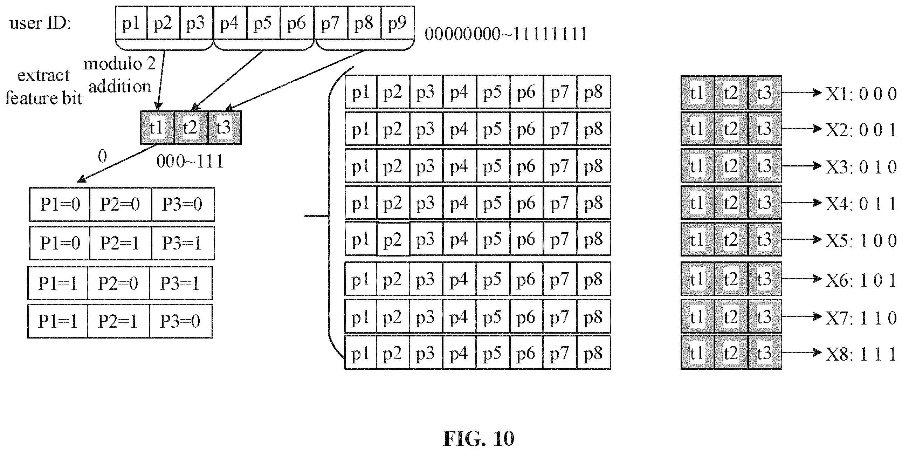

For example, as shown in FIG. 10, the ID information of the terminal device includes nine bits (p1~p9) of which a value range is 000000000-111111111.

The nine bits are divided into three bit groups, for example, p1~p3 is a first bit group, p4~p6 is a second bit group, p7~p9 is a third bit group, a feature bit of each bit group is further extracted. For example, a modulo 2 addition process is performed on the first bit group to obtain a feature t1, a modulo 2 addition process is performed on the second bit group to obtain a feature t2, and a modulo 2 addition process is performed on the third bit group to obtain a feature t3. The three feature bits are combined to obtain a target feature bit t1t2t3. Then the user group to which the terminal device belongs is determined according to a value of the target feature bit. A value set of the target feature bit (t1t2t3) is {X1, X2, X3, X4, X5, X6, X7, X8}, X1 is 000, X2 is 001, X3 is 010, X4 is 011, X5 is 100, X6 is 101, X7 is 110, and X8 is 111.

As an example, as shown in FIG. 10, values {X1, X2, X3, X4, X5, X6, X7, X8} of the target feature bit (t1t2t3) correspond to {user group 1, user group 2,..., user group 8} respectively. That is, user group k corresponds to user ID constraint k, the user ID constraint k may be expressed as: W=k-1, k=1, 2,..., 8, V represents the value of the target feature bit t1t2t3.

As another example, different value ranges of the target feature bit correspond to different user groups. Therefore, the terminal device may determine the user group, to which the terminal device belongs, according to a range to which the value of the target feature bit of the ID information belongs.

In other words, different thresholds of the value of the target feature bit may correspond to different user groups. Therefore, the terminal device may determine the user group, to which the terminal device belongs, according to a threshold corresponding to the value of the target feature bit of the ID information.

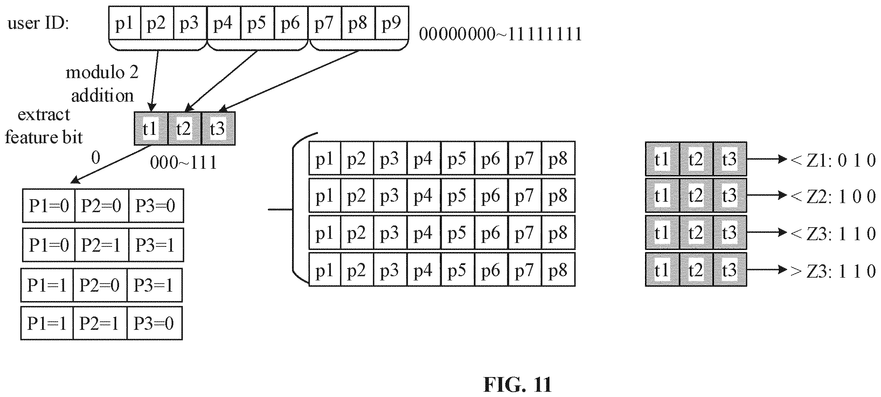

For example, as shown in FIG. 11, the ID information of the terminal device includes nine bits (p1~p9) of which a value range is 000000000-111111111.

The nine bits are divided into three bit groups, for example, p1~p3 is a first bit group, p4~p6 is a second bit group, p7~p9 is a third bit group, a feature bit of each bit group is further extracted. For example, a modulo 2 addition process is performed on the first bit group to obtain a feature t1, a modulo 2 addition process is performed on the second bit group to obtain a feature t2, and a modulo 2 addition process is performed on the third bit group to obtain a feature t3. The three feature bits are combined to obtain a target feature bit t1t2t3. A corresponding user group is determined according to a value of the target feature bit t1t2t3 in combination with multiple thresholds (such as three thresholds). The three thresholds are {Z1, Z2, Z3}, Z1 is 010, Z2 is 100, and Z3 is 110.

As an example, as shown in FIG. 11, different value ranges of the target feature bit t1t2t3 are W<Z1, Z1≤W<Z2, Z2<W<Z3, W≥Z3 which correspond to {user group 1, user group 2, user group 3, user group 4} respectively, W represents the value of the target feature bit t1t2t3. That is, user group 1 corresponds to user ID constraint 1: W<Z1; user group 2 corresponds to user ID constraint 2: Z1≤W<Z2; user group 3 corresponds to user ID constraint 3: Z2≤W<Z3; user group 4 corresponds to user ID constraint 4: W≥Z3.

As another example, different value ranges of the target feature bit t1t2t3 are W≤Z1, Z1<W≤Z2, Z2<W≤Z3, W>Z3 which correspond to {user group 1, user group 2, user group 3, user group 4} respectively, W represents the value of the target feature bit t1t2t3. That is, user group 1 corresponds to user ID constraint 1: W≤Z1; user group 2 corresponds to user ID constraint 2: Z1<W≤Z2; user group 3 corresponds to user ID constraint 3: Z2<W≤Z3; user group 4 corresponds to user ID constraint 4: W>Z3.

In some embodiments, as shown in FIG. 10 and FIG. 11, performing the modulo 2 addition process on the first feature group to obtain the feature bit t1 may include that:
When values of bits in the first bit group are in the following combination, t1=0:
p1=0, p2=0, p3=0; p1=0, p2=1, p3=1; p1=1, p2=0, p3=1; p1=1, p2=1, p3=0.

When the values of the bits in the first bit group are in a combination of other values, t1=1.

Similarly, processing modes of performing the modulo 2 addition process on the second feature group to obtain the feature bit t2 and performing the modulo 2 addition process on the third feature group to obtain the feature bit t3 are similar thereto, which are not elaborated here, for the sake of brevity.

It should be understood that the foregoing grouping mode is only an example, and the embodiments of the disclosure may also use other modes to perform grouping, which are not limited in the disclosure.

Optionally, terminal devices belonging to the same user group may have the same or similar capabilities, or may correspond to the same user type.

Optionally, the ID information of the terminal device may be designed based on capability of the terminal device or the user type of the terminal device.

In some embodiments of the disclosure, the terminal device may determine the user group, to which the terminal device belongs, according to the user type, for example, terminal devices with different user types may be considered as belonging to different user groups.

In some embodiments, the user type of the terminal device may be determined according to the ID information of the terminal device, or may be classified according to other IDs, which are not limited in the disclosure.

For example, the user type of the terminal device may be determined according to constraint conditions met by the ID information of the terminal device.

As an example, the user type of the terminal device may be determined according to constraint conditions met by the feature bit of the ID information of the terminal device.

Taking FIG. 8 as an example, different values of bits of the ID information of the terminal device correspond to different user types.

In some embodiments of the disclosure, the operation of determining the target resource according to the user group to which the terminal device belongs includes the following operations.

The target resource is determined according to the user group, to which the terminal device belongs, in combination with a mapping relationship between the user group and a resource group, the resource group includes at least one resource, and terminal devices in the user group are able to use resources in a corresponding resource group.

Optionally, the mapping relationship may be a mapping relationship between the user group and the resource group, or may be a mapping relationship between user ID constraint corresponding to the user group and the resource group.

Optionally, the mapping relationship between the user group and the resource group may be determined according to capability of the terminal device or supported frequency point of the energy supply signal. For example, the terminal device supports a specific frequency point of the energy supply signal, the resource group determined according to the mapping relationship needs to include frequency domain resources on a back scattering frequency point corresponding to the specific frequency point of the energy supply signal.

In some embodiments, the user group may correspond to the resource group one-to-one, that is, one user group corresponds to one resource group, or multiple user groups may correspond to one resource group.

In some embodiments, each resource group includes one resource, and all the terminal devices in the user group corresponding to the resource group may use the resource.

In some embodiments, each resource group includes multiple resources, and all the terminal devices in the user group corresponding to the resource group may use multiple resources.

In some embodiments, the operation of determining the target resource according to the user group, to which the terminal device belongs, in combination with the mapping relationship between the user group and the resource group includes the following operations.

A target resource group is determined according to the user group to which the terminal device belongs and the mapping relationship between the user group and the resource group.

The target resource is determined from the target resource group.

In some embodiments, if the target resource group includes one resource, the one resource is determined as the target resource.

In some other embodiments, if the target resource group includes multiple resources, the target resource is determined from multiple resources.

As an implementation, the terminal device may randomly select one or more resources from multiple resources, as the target resource.

As another implementation, the terminal device determines the target resource from multiple resources according to a preset rule.

For example, the target resource is determined from multiple resources according to the ID information of the terminal device, for example, resources among multiple resources are sequentially used according to an ascending order of user IDs. For example, a terminal device with a small user ID uses a high-ranked resource among multiple resources, and a terminal device with a large user ID uses a low-ranked resource among multiple resources. Or, vice versa.

As yet another implementation, the terminal device may determine the target resource from multiple resources by using an anti-collision processing algorithm.

Optionally, the anti-collision processing algorithm may include, but is not limited to a polling method, a binary search method, an ALOHA algorithm, a slotted ALOHA algorithm, a binary tree search method, etc.

Modes of determining the target resource will be described below in combination with typical implementation of the resource group.

First embodiment: the resource group is a frequency domain resource group, and the frequency domain resource group includes at least one frequency domain resource.

For example, resources used by the zero-power terminal to perform back scattering communication may be divided into multiple frequency domain resource groups in the frequency domain, and each of different terminal devices may determine a target frequency domain resource used by itself to perform back scattering communication, from multiple frequency domain resource groups. Further, back scattering communication is performed on the target frequency domain resource.

In some embodiments, the terminal device may determine a target resource for communication, according to the user group, to which the terminal device belongs, in combination with a first mapping relationship between the user group and the frequency domain resource group. In this case, the target resource may include one or more target frequency domain resources.

The target frequency domain resource here is a minimum frequency domain resource unit used by the terminal device to perform back scattering communication. For example, it is one or more RBs, or one or more subcarriers, etc.

Optionally, the first mapping relationship may be a mapping relationship between the user group and the frequency domain resource group, or may be a mapping relationship between user ID constraint corresponding to the user group and the frequency domain resource group.

Optionally, the first mapping relationship may be predefined, or may be configured by the network device.

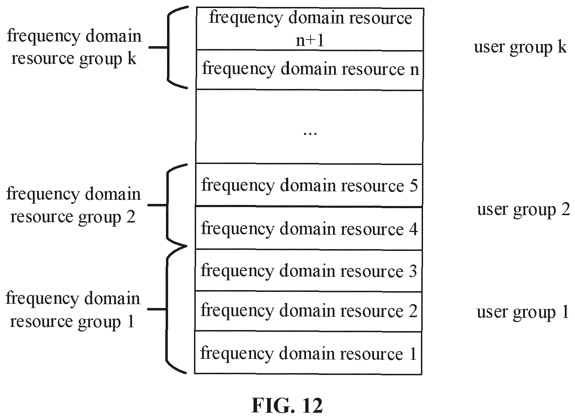

For example, as shown in FIG. 12, user group 1 corresponds to frequency domain resource group 1, user group 2 corresponds to frequency domain resource group 2,..., user group k corresponds to frequency domain resource group k, and each frequency domain resource group includes multiple frequency domain resources.

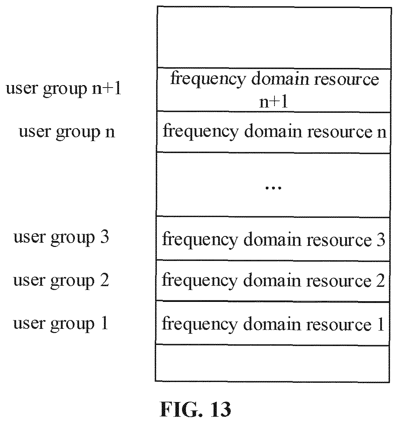

In another example, as shown in FIG. 13, user group 1 corresponds to frequency domain resource 1, user group 2 corresponds to frequency domain resource 2,..., user group n corresponds to frequency domain resource n, user group n+1 corresponds to frequency domain resource n+1. In this case, it may also be considered that each user group corresponds to one frequency domain resource group, however, each frequency domain resource group includes only one frequency domain resource.

It should be understood that in the embodiments of the disclosure, a number of frequency domain resources included in the frequency domain resource group corresponding to each user group may be the same or different.

Optionally, if the terminal device determines that it belongs to user group 1, the terminal device may determine the target frequency domain resource from frequency domain resources in the frequency domain resource group 1.

For example, the terminal device may randomly determine one or more frequency domain resources from the frequency domain resource group 1, as the target frequency domain resource.

In another example, the target frequency domain resource is determined from the frequency domain resource group 1 according to a preset rule. Specifically, for example, the target frequency domain resource is determined from the frequency domain resource group 1 according to the ID information of the terminal device. As an example, resources in the frequency domain resource group 1 are sequentially used according to an ascending order of user IDs.

In another example, the target frequency domain resource is determined from the frequency domain resource group 1 according to an anti-collision processing algorithm.

Second embodiment: the resource group is a time domain resource group, and the time domain resource group includes at least one time domain resource.

For example, resources used by the zero-power terminal to perform back scattering communication may be divided into multiple time domain resource groups in the time domain, and each of different terminal devices may determine a target time domain resource used by itself to perform back scattering communication, from multiple time domain resource groups. Further, back scattering communication is performed on the target time domain resource.

It should be understood that division of resources for back scattering communication here may be division of time domain resources in a preset length (such as a period T), that is, on entire time domain resources, multiple time domain resource groups in each period may be determined according to the period T.

Optionally, in the embodiments of the disclosure, after a target time domain resource in one period is determined, the terminal device may use the same target time domain resource to perform communication in each subsequent period.

In some embodiments, the terminal device may determine a target time domain resource for communication, according to the user group, to which the terminal device belongs, in combination with a second mapping relationship between the user group and the time domain resource group. In this case, the target time domain resource may include one or more target time domain resources.

The target time domain resource here is a minimum time domain resource unit used by the terminal device to perform back scattering communication. For example, it is a slot, a subframe, millisecond (ms), second (s), etc.

Optionally, the second mapping relationship may be a mapping relationship between the user group and the time domain resource group, or may be a mapping relationship between user ID constraint corresponding to the user group and the time domain resource group.

Optionally, the second mapping relationship may be predefined, or may be configured by the network device.

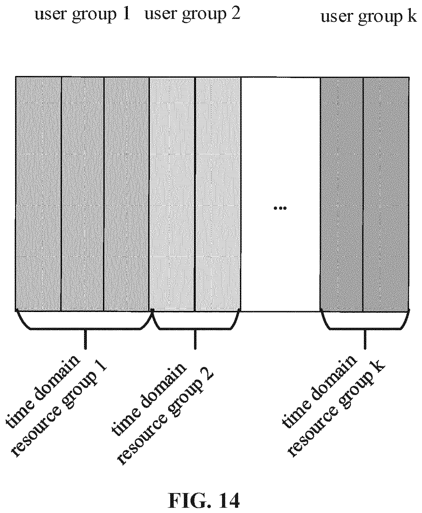

For example, as shown in FIG. 14, user group 1 corresponds to time domain resource group 1, user group 2 corresponds to time domain resource group 2,..., user group k corresponds to time domain resource group k, and each time domain resource group includes multiple time domain resources.

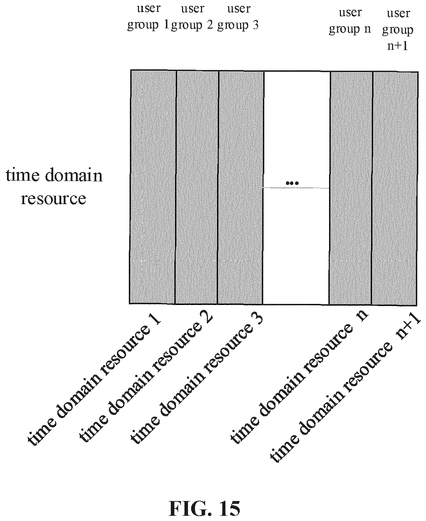

In another example, as shown in FIG. 15, user group 1 corresponds to time domain resource 1, user group 2 corresponds to time domain resource 2,..., user group n corresponds to time domain resource n, user group n+1 corresponds to time domain resource n+1. In this case, it may also be considered that each user group corresponds to one time domain resource group, however, each time domain resource group includes only one time domain resource.

Optionally, if the terminal device determines that it belongs to user group 1, the terminal device may determine the target time domain resource from time domain resources in the time domain resource group 1.

For example, one or more time domain resources may be randomly determined from the time domain resource group 1, as the target time domain resource.

In another example, the target time domain resource is determined from the time domain resource group 1 according to a preset rule. Specifically, for example, the target time domain resource is determined from the time domain resource group 1 according to the ID information of the terminal device. As an example, resources in the time domain resource group 1 are sequentially used according to an ascending order of user IDs.

In another example, the target time domain resource is determined from the time domain resource group 1 according to an anti-collision processing algorithm.

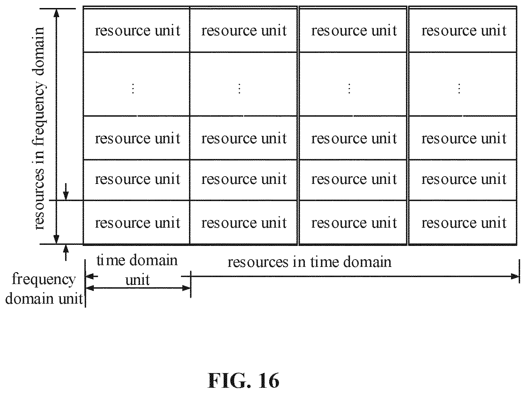

Third embodiment: the resource group is a time-frequency domain resource group, the time-frequency domain resource group includes at least one time-frequency domain resource, and one time-frequency domain resource may be considered as a resource unit, as shown in FIG. 16.

For example, resources used by the zero-power terminal to perform back scattering communication may be divided into multiple time-frequency domain resource groups in the time domain and the frequency domain, and each of different terminal devices may determine a target time-frequency domain resource used by itself to perform back scattering communication, from multiple time-frequency domain resource groups. Further, back scattering communication is performed on the target time-frequency domain resource.

In some embodiments, the terminal device may determine a target time-frequency domain resource for communication, according to the user group, to which the terminal device belongs, in combination with a third mapping relationship between the user group and the time-frequency domain resource group. In this case, the target time-frequency domain resource may include one or more target time-frequency domain resources.

The target time-frequency domain resource here is a minimum time-frequency domain resource unit used by the terminal device to perform back scattering communication.

Optionally, the third mapping relationship may be a mapping relationship between the user group and the time-frequency domain resource group, or may be a mapping relationship between user ID constraint corresponding to the user group and the time-frequency domain resource group.

Optionally, the third mapping relationship may be predefined, or may be configured by the network device.

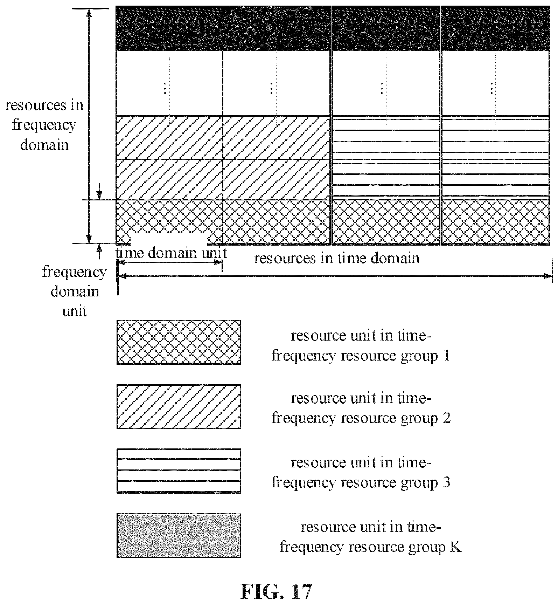

For example, as shown in FIG. 17, user group 1 corresponds to time-frequency domain resource group 1, user group 2 corresponds to time-frequency domain resource group 2, user group 3 corresponds to time-frequency domain resource group 3, and each time-frequency domain resource group includes at least one resource unit.

If the terminal device determines that it belongs to user group 1, the terminal device may determine the target time-frequency domain resource from time-frequency domain resources in the time-frequency domain resource group 1.

For example, one or more resource units may be randomly determined from the time-frequency domain resource group 1, as the target time-frequency domain resource.

In another example, the target time-frequency domain resource is determined from the time-frequency domain resource group 1 according to a preset rule. Specifically, for example, the target time-frequency domain resource is determined from the time-frequency domain resource group 1 according to the ID information of the terminal device. As an example, resources in the time-frequency domain resource group 1 are sequentially used according to an ascending order of user IDs.

In another example, the target time-frequency domain resource is determined from the time-frequency domain resource group 1 according to an anti-collision processing algorithm.

Specific implementations of determining the target resource according to the user group, to which the terminal device belongs, are described as above. Specific implementations of determining the target frequency point according to the user group, to which the terminal device belongs, are described below in combination with specific embodiments.

In some embodiments of the disclosure, the operation of determining the target frequency point, according to the user group to which the terminal device belongs includes the following operations.

A target frequency point group is determined according to the user group, to which the terminal device belongs, in combination with a mapping relationship between the user group and a frequency point group.

The target frequency point is determined from the target frequency point group.

Modes of determining the user group, to which the terminal device belongs, may refer to relevant descriptions of the foregoing embodiments, which are not elaborated here, for the sake of brevity.

In some embodiments, terminal devices belonging to the same user group may have the same or similar capabilities, for example, all the terminal devices support the frequency point of one energy supply signal, or support a few number of frequency points of energy supply signals or the like, or correspond to the same user type.

Optionally, the mapping relationship between the user group and the frequency point group may be predefined, or may be configured by the network device.

Optionally, the mapping relationship between the user group and the frequency point group is determined according to capability of the terminal device or the frequency point of the energy supply signal supported by the terminal device. For example, the terminal device supports a specific frequency point of the energy supply signal, the frequency point group determined according to the mapping relationship between the user group and the frequency point group needs to include the specific frequency point of the energy supply signal.

In some embodiments, the user group may correspond to the frequency point group one-to-one, that is, one user group corresponds to one frequency point group, or multiple user groups may correspond to one frequency point group.

In some embodiments, each frequency point group includes one frequency point, and all the terminal devices in the user group corresponding to the frequency point group may receive the energy supply signal at the frequency point.

In some embodiments, each frequency point group includes multiple frequency points, and all the terminal devices in the user group corresponding to the frequency point group may receive the energy supply signal at multiple frequency points.

In some embodiments, the operation of determining the target frequency point according to the user group, to which the terminal device belongs, in combination with the mapping relationship between the user group and the frequency point group includes the following operations.

A target frequency point group is determined according to the user group, to which the terminal device belongs, and the mapping relationship between the user group and the frequency point group.

The target frequency point is determined from the target frequency point group

In some embodiments, if the target frequency point group includes one frequency point, the one frequency point is determined as the target frequency point. Further, the energy supply signal may be received at the target frequency point.

In some other embodiments, if the target frequency point group includes multiple frequency points, the target frequency point is determined from multiple frequency points.

As an implementation, the terminal device may randomly select one or more frequency points from multiple frequency points, as the target frequency point. Further, the energy supply signal may be received at the target frequency point.

As another implementation, the terminal device determines the target frequency point from multiple frequency points according to a preset rule.

For example, the target frequency point is determined from multiple frequency points according to the ID information of the terminal device. For example, a terminal device with a small user ID uses a high-ranked frequency point or a smaller frequency point among multiple frequency points, and a terminal device with a large user ID uses a low-ranked frequency point or a larger frequency point among multiple frequency points. Or, vice versa.

As yet another implementation, the terminal device may use an anti-collision processing algorithm to determine the target frequency point from multiple frequency points.

Optionally, the anti-collision processing algorithm may include, but is not limited to a polling method, a binary search method, an ALOHA algorithm, a slotted ALOHA algorithm, a binary tree search method, etc.

In some embodiments of the disclosure, the terminal device may also directly determine the target resource and/or the target frequency point from the first information, that is, operations of determining the user group may be omitted.

In some embodiments, the terminal device may determine the target resource according to constraint conditions met by the ID information of the terminal device.

Optionally, different constraint conditions correspond to different resources. That is, there may be a mapping relationship between constraint conditions and resources.

Therefore, the terminal device may determine the target resource according to constraint conditions met by the ID information, in combination with the mapping relationship.

Optionally, a number of resources corresponding to each constraint condition may be one or more.

Optionally, the number of resources corresponding to each constraint condition may be the same or different.

Optionally, all the terminal devices of which ID information meet the same constraint condition may use resources corresponding to the constraint condition.

Optionally, if a first constraint condition corresponds to one resource, all the terminal devices of which ID information meet the first constraint condition may use the one resource corresponding to the first constraint condition.

Optionally, if a second constraint condition corresponds to multiple resources, all the terminal devices of which ID information meet the second constraint condition may use multiple resources corresponding to the second constraint condition.

For example, the terminal devices of which ID information meet the second constraint condition may randomly select one or more resources from multiple resources, as the target resource.

In another example, the terminal devices of which ID information meet the second constraint condition may determine the target resource from multiple resources according to a preset rule. As an example, target resources used by themselves to perform communication are sequentially determined from multiple resources, according to an order of sizes of the ID information.

In another example, the terminal devices of which ID information meet the second constraint condition use an anti-collision processing algorithm to determine the target resource from multiple resources.

Optionally, the anti-collision processing algorithm may include, but is not limited to a polling method, a binary search method, an ALOHA algorithm, a slotted ALOHA algorithm, a binary tree search method, etc.

It should be understood that similar to the foregoing embodiments, the resources here may be frequency domain resources, time domain resources, or time-frequency domain resources, etc.

In some embodiments, the terminal device may determine the target frequency point according to constraint conditions met by the ID information of the terminal device.

Optionally, different constraint conditions correspond to different frequency points. That is, there may be a mapping relationship between constraint conditions and frequency points.

Therefore, the terminal device may determine the target frequency point according to constraint conditions met by the ID information, in combination with the mapping relationship.

Optionally, a number of frequency points corresponding to each constraint condition may be one or more.

Optionally, the number of frequency points corresponding to each constraint condition may be the same or different.

Optionally, all the terminal devices of which ID information meet the same constraint condition may receive an energy supply signal at the frequency point corresponding to the constraint condition.

Optionally, if a first constraint condition corresponds to one frequency point, all the terminal devices of which ID information meet the first constraint condition may use the one frequency point corresponding to the first constraint condition.

Optionally, if a second constraint condition corresponds to multiple frequency points, all the terminal devices of which ID information meet the second constraint condition may receive the energy supply signal at multiple frequency points corresponding to the second constraint condition.

For example, the terminal devices of which ID information meet the second constraint condition may randomly select one or more frequency points from multiple frequency points, as the target frequency point.

In another example, the terminal devices of which ID information meet the second constraint condition may determine the target frequency point from multiple frequency points according to a preset rule. As an example, target frequency points are sequentially determined from multiple frequency points, according to an order of sizes of the ID information.

In another example, the terminal devices of which ID information meet the second constraint condition use an anti-collision processing algorithm to determine the target frequency point from multiple frequency points.

Optionally, the anti-collision processing algorithm may include, but is not limited to a polling method, a binary search method, an ALOHA algorithm, a slotted ALOHA algorithm, a binary tree search method, etc.

It should be understood that similar to the foregoing embodiments, the frequency point here may be the frequency point of the energy supply signal, etc.

In some embodiments, the terminal device may determine the target resource according to the user type of the terminal device.

Optionally, different user types correspond to different resources. That is, there may be a mapping relationship between user types and resources.

Therefore, the terminal device may determine the target resource according to the user types, in combination with the mapping relationship.

Optionally, a number of resources corresponding to each user type may be one or more.

Optionally, the number of resources corresponding to each user type may be the same or different.

Optionally, all the terminal devices with the same user type may use resources corresponding to the user type.

Optionally, if a first user type corresponds to one resource, all the terminal devices with the first user type may use the one resource corresponding to the first user type.

Optionally, if a second user type corresponds to multiple resources, all the terminal devices with the second user type may use multiple resources corresponding to the second user type.

For example, the terminal devices with the second user type may randomly select one or more resources from multiple resources, as the target resource.

In another example, the terminal devices with the second user type may determine the target resource from multiple resources according to a preset rule. As an example, target resources used by themselves to perform communication are sequentially determined from multiple resources, according to an order of sizes of ID information of the terminal devices.

In another example, the terminal devices with the second user type use an anti-collision processing algorithm to determine the target resource from multiple resources.

Optionally, the anti-collision processing algorithm may include, but is not limited to a polling method, a binary search method, an ALOHA algorithm, a slotted ALOHA algorithm, a binary tree search method, etc.

It should be understood that similar to the foregoing embodiments, the resources here may be frequency domain resources, time domain resources, or time-frequency domain resources, etc.

In some embodiments, the terminal device may determine the target frequency point according to the user type of the terminal device.

Optionally, different user types correspond to different frequency points. That is, there may be a mapping relationship between user types and frequency points.

Therefore, the terminal device may determine the target frequency point according to the user types, in combination with the mapping relationship.

Optionally, a number of frequency points corresponding to each user type may be one or more.

Optionally, the number of frequency points corresponding to each user type may be the same or different.

Optionally, all the terminal devices with the user type may receive an energy supply signal at the frequency point corresponding to the user type.

Optionally, if a first user type corresponds to one frequency point, all the terminal devices of which ID information meet the first user type may use the one frequency point corresponding to the first user type.

Optionally, if a second user type corresponds to multiple frequency points, all the terminal devices of which ID information meet the second user type may receive the energy supply signal at multiple frequency points corresponding to the second user type.

For example, the terminal devices with the second user type may randomly select one or more frequency points from multiple frequency points, as the target frequency point.

In another example, the terminal devices with the second user type may determine the target frequency point from multiple frequency points according to a preset rule. As an example, target frequency points are sequentially determined from multiple frequency points, according to an order of sizes of the ID information.

In another example, the terminal devices with the second user type use an anti-collision processing algorithm to determine the target frequency point from multiple frequency points.

Optionally, the anti-collision processing algorithm may include, but is not limited to a polling method, a binary search method, an ALOHA algorithm, a slotted ALOHA algorithm, a binary tree search method, etc.

It should be understood that similar to the foregoing embodiments, the frequency point here may be the frequency point of the energy supply signal, etc.

Through the above embodiments, the terminal device determines the target resource and/or the target frequency point for communication, according to the ID information or the user type, for example, terminal devices are grouped based on ID information of the terminal devices, or the terminal devices are grouped based on the user type; further, the target resource and/or the target frequency point is determined based on the mapping relationship between the user group and the resource group or the frequency point group, which is beneficial to ensure that terminal devices in different user groups use different resources to perform communication as much as possible, and/or use different frequency points to receive the energy supply signal, so that it is beneficial to reduce a collision problem of uplink transmission of the terminal device.

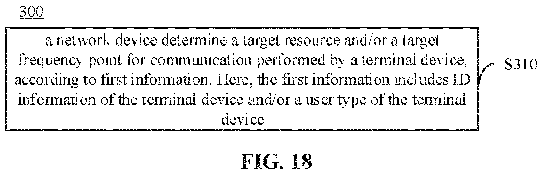

The wireless communication method according to the embodiment of the disclosure is described in detail as above with reference to FIG. 6 to FIG. 17 from the perspective of the terminal device. A wireless communication method according to another embodiment of the disclosure is described in detail below with reference to FIG. 18 from the perspective of the network device. It should be understood that descriptions on the network device side and descriptions on the terminal device side correspond to each other, and similar descriptions may refer to the above descriptions, which are not elaborated here to avoid repetition.

FIG. 18 is a schematic flowchart of a wireless communication method 300 according to another embodiment of the disclosure. The method 300 may be executed by the network device in the communication system shown in FIG. 1. As shown in FIG. 18, the method 300 includes the following contents.

At S310, the network device determines a target resource and/or a target frequency point for communication performed by a terminal device, according to first information, here the first information includes ID information of the terminal device and/or a user type of the terminal device, and the terminal device obtains energy for communication through power harvesting.

It should be understood that the terminal device in the method 300 may be the terminal device in the method 200, and specific implementation of the terminal device refers to relevant descriptions in the method 200.

In some embodiments, the terminal device may be a zero-power terminal, such as an electronic tag.

In the method 300, the network device may determine the target resource and/or the target frequency point for communication in a mode consistent with that of the terminal device; further, the network device may receive uplink data sent by the terminal device on the target resource, or send the energy supply signal at the target frequency point, and specific implementation refers to relevant descriptions in the method 200, which are not elaborated here, for the sake of brevity.

For example, a first terminal device may determine a target resource and/or a target frequency point used by the first terminal device to perform communication, according to ID information of the first terminal device and/or a user type of the first terminal device; further, the first terminal device may send uplink data on the target resource, and/or receive an energy supply signal at the target frequency point. Correspondingly, the network device may determine the target resource and/or the target frequency point used by the first terminal device to perform communication, according to the ID information of the first terminal device and/or the user type of the first terminal device. Further, the network device may receive uplink data sent by the first terminal device on the target resource, or send the energy supply signal at the target frequency point, to supply energy to the first terminal device.

In another example, a second terminal device may determine a target resource and/or a target frequency point used by the second terminal device to perform communication, according to ID information of the second terminal device and/or a user type of the second terminal device; further, the second terminal device may send uplink data on the target resource, and/or receive an energy supply signal at the target frequency point. Correspondingly, the network device may determine the target resource and/or the target frequency point used by the second terminal device to perform communication, according to the ID information of the second terminal device and/or the user type of the second terminal device. Further, the network device may receive uplink data sent by the second terminal device on the target resource, or send the energy supply signal at the target frequency point, to supply energy to the second terminal device. That is, the network device may receive uplink data sent by different terminal devices on different resources, and/or provide energy supply signals to different terminal devices at different frequency points, which is beneficial to reduce a problem of data omission or large delay due to collision occurred when multiple terminal devices send uplink data to the network device simultaneously.

In some embodiments of the disclosure, S310 may include the following operations.

A user group to which the terminal device belongs is determined according to the first information

The target resource and/or the target frequency point is determined according to the user group to which the terminal device belongs.

In some embodiments of the disclosure, the ID information of the terminal device includes multiple bits, and the operation of determining the user group, to which the terminal device belongs, according to the first information includes the following operations. The user group to which the terminal device belongs is determined according to values of part or all of multiple bits.

In some embodiments of the disclosure, the ID information of the terminal device includes multiple bits, and the operation of determining the user group, to which the terminal device belongs, according to the first information includes the following operations.

Part or all of multiple bits are divided into multiple bit groups.

The user group to which the terminal device belongs is determined according to values of multiple bit groups.

In some embodiments of the disclosure, the user group to which the terminal device belongs is determined according to the user type of the terminal device, and terminal devices with a same user type belong to a same user group.

In some embodiments of the disclosure, the method 300 further includes the following operations.

The user type of the terminal device is determined according to the ID information of the terminal device.

In some embodiments of the disclosure, the operation of determining the target resource and/or the target frequency point, according to the user group to which the terminal device belongs includes the following operations. The target resource is determined according to the user group, to which the terminal device belongs, in combination with a mapping relationship between the user group and a resource group, here the resource group includes at least one resource, and terminal devices in the user group are able to use resources in a corresponding resource group.

In some embodiments of the disclosure, the operation of determining the target resource according to the user group, to which the terminal device belongs, in combination with the mapping relationship between the user group and the resource group includes the following operations.

A target resource group is determined according to the user group to which the terminal device belongs and the mapping relationship.

The target resource is determined from the target resource group.

In some embodiments of the disclosure, the operation of determining the target resource from the target resource group includes the following operations.

If the target resource group includes one resource, the one resource is determined as the target resource.

Or, if the target resource group includes multiple resources, the target resource is determined from multiple resources.

In some embodiments of the disclosure, the operation of determining the target resource from multiple resources includes the following operations.

At least one resource is randomly selected from multiple resources, as the target resource.

Or, the target resource is determined from multiple resources according to a preset rule.

Or, the target resource is determined from multiple resources according to an anti-collision processing algorithm.

In some embodiments of the disclosure, the mapping relationship between the user group and the resource group includes a first mapping relationship between the user group and a frequency domain resource group, and the frequency domain resource group includes at least one frequency domain resource, and the target resource includes at least one target frequency domain resource.

In some embodiments of the disclosure, the frequency domain resource is a minimum frequency domain resource unit required by the terminal device to perform back scattering communication.

In some embodiments of the disclosure, the mapping relationship between the user group and the resource group includes a second mapping relationship between the user group and a time domain resource group, and the time domain resource group includes at least one time domain resource, and the target resource includes at least one target time domain resource.

In some embodiments of the disclosure, the time domain resource is a minimum time domain resource unit required by the terminal device to perform back scattering communication.

In some embodiments of the disclosure, the mapping relationship between the user group and the resource group includes a third mapping relationship between the user group and a time-frequency domain resource group, and the time-frequency domain resource group includes at least one time-frequency domain resource, and the target resource includes at least one target time-frequency domain resource.

In some embodiments, the time-frequency domain resource is a minimum time-frequency domain resource unit required by the terminal device to perform back scattering communication.

In some embodiments, the operation of determining the target resource and/or the target frequency point, according to the user group to which the terminal device belongs includes the following operations.

A target frequency point group is determined according to the user group, to which the terminal device belongs, in combination with a mapping relationship between the user group and a frequency point group.

The target frequency point is determined from the target frequency point group.

In some embodiments of the disclosure, the operation of determining the target frequency point from the target frequency point group includes the following operations.

If the target frequency point group includes one frequency point, the one frequency point is determined as the target frequency point.

Or, if the target frequency point group includes multiple frequency points, the target frequency point is determined from multiple frequency points.

In some embodiments of the disclosure, the operation of determining the target frequency point from multiple frequency points includes the following operations.

At least one frequency point is randomly selected from multiple frequency points, as the target frequency point.

Or, the target frequency point is determined from multiple frequency points according to a preset rule.

Or, the target frequency point is determined from multiple frequency points according to an anti-collision processing algorithm.

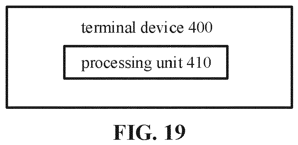

The method embodiments of the disclosure are described in detail as above with reference to FIG. 6 to FIG. 18. Device embodiments of the disclosure are described in detail below with reference to FIG. 19 to FIG. 17. It should be understood that the device embodiment and the method embodiment correspond to each other, and similar descriptions may refer to the method embodiment.

FIG. 19 shows a schematic block diagram of a terminal device 400 according to an embodiment of the disclosure. As shown in FIG. 13, the terminal device 400 includes a processing unit 410.

The processing unit 410 is configured to determine a target resource and/or a target frequency point for communication, according to first information, here the first information includes ID information of the terminal device and/or a user type of the terminal device, and the terminal device obtains energy for communication through power harvesting.

In some embodiments of the disclosure, the processing unit 410 is further configured to:
determine a user group to which the terminal device belongs, according to the first information; and
determine the target resource and/or the target frequency point, according to the user group to which the terminal device belongs.

In some embodiments of the disclosure, the ID information of the terminal device includes multiple bits, and the processing unit 410 is further configured to:
determine the user group, to which the terminal device belongs, according to values of part or all of multiple bits.

In some embodiments of the disclosure, the ID information of the terminal device includes multiple bits, and the processing unit 410 is further configured to:
divide part or all of multiple bits into multiple bit groups; and
determine the user group, to which the terminal device belongs, according to values of multiple bit groups.

In some embodiments of the disclosure, the user group to which the terminal device belongs is determined according to the user type of the terminal device, and terminal devices with a same user type belong to a same user group.

In some embodiments of the disclosure, the processing unit 410 is further configured to:
determine the user type of the terminal device according to the ID information of the terminal device.

In some embodiments of the disclosure, the processing unit 410 is further configured to:
determine the target resource according to the user group, to which the terminal device belongs, in combination with a mapping relationship between the user group and a resource group, here the resource group includes at least one resource, and terminal devices in the user group are able to use resources in a corresponding resource group.

In some embodiments of the disclosure, the processing unit 410 is further configured to:
determine a target resource group according to the user group to which the terminal device belongs and the mapping relationship; and
determine the target resource from the target resource group.

In some embodiments of the disclosure, the processing unit 410 is further configured to:
if the target resource group includes one resource, determine the one resource as the target resource; or
if the target resource group includes multiple resources, determine the target resource from multiple resources.

In some embodiments of the disclosure, the processing unit 410 is further configured to:
randomly select at least one resource from multiple resources, as the target resource; or
determine the target resource from multiple resources according to a preset rule; or
determine the target resource from multiple resources according to an anti-collision processing algorithm.

In some embodiments of the disclosure, the mapping relationship between the user group and the resource group includes a first mapping relationship between the user group and a frequency domain resource group, and the frequency domain resource group includes at least one frequency domain resource, and the target resource includes at least one target frequency domain resource.

In some embodiments of the disclosure, the frequency domain resource is a minimum frequency domain resource unit required by the terminal device to perform back scattering communication.

In some embodiments of the disclosure, the mapping relationship between the user group and the resource group includes a second mapping relationship between the user group and a time domain resource group, and the time domain resource group includes at least one time domain resource, and the target resource includes at least one target time domain resource.

In some embodiments of the disclosure, the time domain resource is a minimum time domain resource unit required by the terminal device to perform back scattering communication.

In some embodiments of the disclosure, the mapping relationship between the user group and the resource group includes a third mapping relationship between the user group and a time-frequency domain resource group, and the time-frequency domain resource group includes at least one time-frequency domain resource, and the target resource includes at least one target time-frequency domain resource.

In some embodiments of the disclosure, the time-frequency domain resource is a minimum time-frequency domain resource unit required by the terminal device to perform back scattering communication.

In some embodiments of the disclosure, the processing unit 410 is further configured to:
determine a target frequency point group according to the user group, to which the terminal device belongs, in combination with a mapping relationship between the user group and a frequency point group; and
determine the target frequency point from the target frequency point group.

In some embodiments of the disclosure, the processing unit 410 is further configured to:
if the target frequency point group includes one frequency point, determine the one frequency point as the target frequency point; or
if the target frequency point group includes multiple frequency points, determine the target frequency point from multiple frequency points.

In some embodiments of the disclosure, the processing unit 410 is further configured to:
randomly select at least one frequency point from multiple frequency points, as the target frequency point; or
determine the target frequency point from multiple frequency points according to a preset rule; or
determine the target frequency point from multiple frequency points according to an anti-collision processing algorithm.

In some embodiments of the disclosure, the terminal device 500 further includes a communication unit.

The communication unit is configured to receive an energy supply signal at the target frequency point, to acquire energy for back scattering.

Optionally, in some embodiments, the above communication unit may be a communication interface or a transceiver, or an input/output (I/O) interface of a communication chip or a system-on-chip (SOC). The above processing unit may be one or more processors.

It should be understood that the terminal device 400 according to the embodiment of the disclosure may correspond to the terminal device in the method embodiments of the disclosure, and the foregoing and other operations and/or functions of each unit in the terminal device 400 implement corresponding processes of the terminal device in the method 200 shown in FIG. 6 to FIG. 17 respectively, which are not elaborated here, for the sake of brevity.

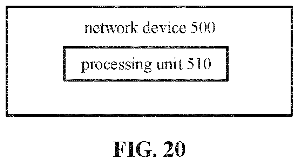

FIG. 20 is a schematic block diagram of a network device according to an embodiment of the disclosure. The network device 500 in FIG. 14 includes a processing unit 510.

The processing unit 510 is configured to determine a target resource and/or a target frequency point for communication performed by a terminal device, according to first information, here the first information includes ID information of the terminal device and/or a user type of the terminal device, and the terminal device obtains energy for communication through power harvesting.

In some embodiments of the disclosure, the processing unit 510 is further configured to:
determine a user group to which the terminal device belongs, according to the first information; and
determine the target resource and/or the target frequency point, according to the user group to which the terminal device belongs.

In some embodiments of the disclosure, the ID information of the terminal device includes multiple bits, and the processing unit 510 is further configured to:
determine the user group, to which the terminal device belongs, according to values of part or all of multiple bits.

In some embodiments of the disclosure, the ID information of the terminal device includes multiple bits, and the processing unit 510 is further configured to:
divide part or all of multiple bits into multiple bit groups; and
determine the user group, to which the terminal device belongs, according to values of multiple bit groups.

In some embodiments of the disclosure, the user group to which the terminal device belongs is determined according to the user type of the terminal device, and terminal devices with a same user type belong to a same user group.

In some embodiments of the disclosure, the processing unit 510 is further configured to:
determine the user type of the terminal device according to the ID information of the terminal device.

In some embodiments of the disclosure, the processing unit 510 is further configured to:
determine the target resource according to the user group, to which the terminal device belongs, in combination with a mapping relationship between the user group and a resource group, here the resource group includes at least one resource, and terminal devices in the user group are able to use resources in a corresponding resource group.

In some embodiments of the disclosure, the processing unit 510 is further configured to:
determine a target resource group according to the user group to which the terminal device belongs and the mapping relationship; and
determine the target resource from the target resource group.

In some embodiments of the disclosure, the processing unit 510 is further configured to:
if the target resource group includes one resource, determine the one resource as the target resource; or
if the target resource group includes multiple resources, determine the target resource from multiple resources.

In some embodiments of the disclosure, the processing unit 510 is further configured to:
randomly select at least one resource from multiple resources, as the target resource; or
determine the target resource from multiple resources according to a preset rule; or
determine the target resource from multiple resources according to an anti-collision processing algorithm.

In some embodiments of the disclosure, the mapping relationship between the user group and the resource group includes a first mapping relationship between the user group and a frequency domain resource group, and the frequency domain resource group includes at least one frequency domain resource, and the target resource includes at least one target frequency domain resource.

In some embodiments of the disclosure, the frequency domain resource is a minimum frequency domain resource unit required by the terminal device to perform back scattering communication.

In some embodiments of the disclosure, the mapping relationship between the user group and the resource group includes a second mapping relationship between the user group and a time domain resource group, and the time domain resource group includes at least one time domain resource, and the target resource includes at least one target time domain resource.

In some embodiments of the disclosure, the time domain resource is a minimum time domain resource unit required by the terminal device to perform back scattering communication.

In some embodiments of the disclosure, the mapping relationship between the user group and the resource group includes a third mapping relationship between the user group and a time-frequency domain resource group, and the time-frequency domain resource group includes at least one time-frequency domain resource, and the target resource includes at least one target time-frequency domain resource.

In some embodiments of the disclosure, the time-frequency domain resource is a minimum time-frequency domain resource unit required by the terminal device to perform back scattering communication.

In some embodiments of the disclosure, the processing unit 510 is further configured to:
determine a target frequency point group according to the user group, to which the terminal device belongs, in combination with a mapping relationship between the user group and a frequency point group; and
determine the target frequency point from the target frequency point group.

In some embodiments of the disclosure, the processing unit 510 is further configured to:
if the target frequency point group includes one frequency point, determine the one frequency point as the target frequency point; or
if the target frequency point group includes multiple frequency points, determine the target frequency point from multiple frequency points.

In some embodiments of the disclosure, the processing unit 510 is further configured to:
randomly select at least one frequency point from multiple frequency points, as the target frequency point; or
determine the target frequency point from multiple frequency points according to a preset rule; or
determine the target frequency point from multiple frequency points according to an anti-collision processing algorithm.

In some embodiments of the disclosure, the terminal device receives an energy supply signal at the target frequency point, to acquire energy for back scattering.

Optionally, in some embodiments, the above communication unit may be a communication interface or a transceiver, or an I/O interface of a communication chip or SOC. The above processing unit may be one or more processors.

It should be understood that the network device 500 according to the embodiment of the disclosure may correspond to the network device in the method embodiments of the disclosure, and the foregoing and other operations and/or functions of each unit in the network device 500 implement corresponding processes of the network device in the method shown in FIG. 18 respectively, which are not elaborated here, for the sake of brevity.

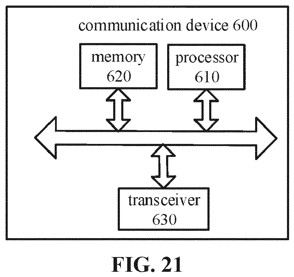

FIG. 21 is a schematic structural diagram of a communication device 600 provided in an embodiment of the disclosure. The communication device 600 shown in FIG. 21 includes a processor 610, and the processor 610 may call and run a computer program from a memory, to implement the methods in the embodiments of the disclosure.

In some embodiments, as shown in FIG. 1, the communication device 600 may further include a memory 620. The processor 610 may call and run a computer program from the memory 620, to implement the methods in the embodiments of the disclosure.

The memory 620 may be a separate device independent of the processor 610, or may be integrated in the processor 610.

Optionally, as shown in FIG. 21, the communication device 600 may further include a transceiver 630, and the processor 610 may control the transceiver 630 to communicate with other devices. Specifically, the processor 610 may control the transceiver 630 to send information or data to other devices, or receive information or data sent by other devices.

The transceiver 630 may include a transmitter and a receiver. The transceiver 630 may further include an antenna, and there may be one or more antennas in number.

Optionally, the communication device 600 may specifically be the network device in the embodiments of the disclosure, and the communication device 600 may implement corresponding processes implemented by the network device in each method of the embodiments of the disclosure, which are not elaborated here, for the sake of brevity.

Optionally, the communication device 600 may specifically be the mobile terminal/terminal device in the embodiments of the disclosure, and the communication device 600 may implement corresponding processes implemented by the mobile terminal/terminal device in each method of the embodiments of the disclosure, which are not elaborated here, for the sake of brevity.

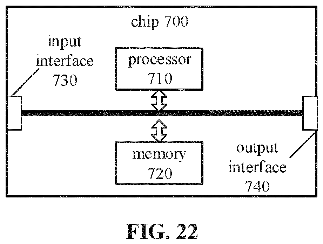

FIG. 22 is a schematic structural diagram of a chip according to an embodiment of the disclosure. The chip 700 shown in FIG. 22 includes a processor 710, and the processor 710 may call and run a computer program from a memory, to implement the methods in the embodiments of the disclosure.

Optionally, as shown in FIG. 22, the chip 700 may further include a memory 720. The processor 710 may call and run a computer program from the memory 720, to implement the methods in the embodiments of the disclosure.

The memory 720 may be a separate device independent of the processor 710, or may be integrated in the processor 710.

Optionally, the chip 700 may further include an input interface 730. The processor 710 may control the input interface 730 to communicate with other devices or chips. Specifically, the processor 710 may control the input interface 730 to acquire information or data sent by other devices or chips.

Optionally, the chip 700 may further include an output interface 740. The processor 710 may control the output interface 740 to communicate with other devices or chips. Specifically, the processor 710 may control the output interface 740 to output information or data to other devices or chips.

Optionally, the chip may be applied to the network device in the embodiments of the disclosure, and the chip may implement corresponding processes implemented by the network device in each method of the embodiments of the disclosure, which are not elaborated here, for the sake of brevity.

Optionally, the chip may be applied to the mobile terminal/terminal device in the embodiments of the disclosure, and the chip may implement corresponding processes implemented by the mobile terminal/terminal device in each method of the embodiments of the disclosure, which are not elaborated here, for the sake of brevity.

It should be understood that the chip mentioned in the embodiments of the disclosure may also be referred to as a system-level chip, a system chip, a chip system, or a SOC chip, etc.

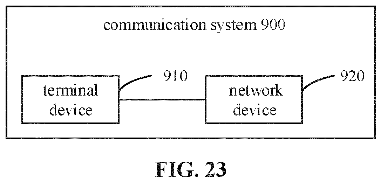

FIG. 23 is a schematic block diagram of a communication system 900 provided in an embodiment of the disclosure. As shown in FIG. 23, the communication system 900 includes a terminal device 910 and a network device 920.

The terminal device 910 may be configured to implement corresponding functions implemented by the terminal device in the above methods, the network device 920 may be configured to implement corresponding functions implemented by the network device in the above methods, which are not elaborated here, for the sake of brevity.

It should be understood that the processor in the embodiments of the disclosure may be an integrated circuit chip with signal processing capability. During implementation, each operation of the above method embodiments may be completed by an integrated logic circuit in form of hardware in the processor or instructions in form of software. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component, so that various methods, operations and logic block diagrams disclosed in the embodiments of the disclosure may be implemented or executed. The general-purpose processor may be a microprocessor, or the processor may be any conventional processor, etc. Operations of the methods disclosed in combination with the embodiments of the disclosure may be directly embodied as being performed and completed by a hardware decoding processor, or by a combination of hardware in the decoding processor and software modules. The software modules may be located in a mature storage medium in the field, such as a random memory, a flash memory, a Read-Only Memory (ROM), a Programmable ROM (PROM), or an electrically erasable programmable memory, a register, etc. The storage medium is located in a memory, and the processor reads information in the memory, and completes operations of the above methods in combination with hardware thereof.

It may be understood that the memory in the embodiments of the disclosure may be a volatile memory or a non-volatile memory, or may include both volatile and non-volatile memories. The non-volatile memory may be a ROM, a PROM, an Erasable PROM (EPROM), an Electrically EPROM (EEPROM) or a flash memory. The volatile memory may be a Random Access Memory (RAM) used as an external cache. By way of exemplary rather than restrictive descriptions, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memories of the systems and methods described here are intended to include, but are not limited to these and any other suitable types of memories.

It should be understood that the above memories are exemplary rather than restrictive descriptions. For example, the memory in the embodiments of the disclosure may also be a SRAM, a DRAM, a SDRAM, a DDR SDRAM, an ESDRAM, a SLDRAM, a DR RAM, etc. That is, the memory in the embodiments of the disclosure is intended to include, but is not limited to these and any other suitable types of memories.

An embodiment of the disclosure further provides a computer-readable storage medium, the computer-readable storage medium is configured to store a computer program.

Optionally, the computer-readable storage medium may be applied to the network device in the embodiments of the disclosure, and the computer program enables a computer to execute corresponding processes implemented by the network device in each method of the embodiments of the disclosure, which are not elaborated here, for the sake of brevity.

Optionally, the computer-readable storage medium may be applied to the mobile terminal/terminal device in the embodiments of the disclosure, and the computer program enables a computer to execute corresponding processes implemented by the mobile terminal/terminal device in each method of the embodiments of the disclosure, which are not elaborated here, for the sake of brevity.

An embodiment of the disclosure further provides a computer program product, the computer program product includes computer program instructions.

Optionally, the computer program product may be applied to the network device in the embodiments of the disclosure, and the computer program instructions enable a computer to execute corresponding processes implemented by the network device in each method of the embodiments of the disclosure, which are not elaborated here, for the sake of brevity.

Optionally, the computer program product may be applied to the mobile terminal/terminal device in the embodiments of the disclosure, and the computer program instructions enable a computer to execute corresponding processes implemented by the mobile terminal/terminal device in each method of the embodiments of the disclosure, which are not elaborated here, for the sake of brevity.

An embodiment of the disclosure further provides a computer program.

Optionally, the computer program may be applied to the network device in the embodiments of the disclosure, and the computer program enables a computer to execute corresponding processes implemented by the network device in each method of the embodiments of the disclosure when the computer program is run on the computer, which are not elaborated here, for the sake of brevity.

Optionally, the computer program may be applied to the mobile terminal/terminal device in the embodiments of the disclosure, and the computer program enables a computer to execute corresponding processes implemented by the mobile terminal/terminal device in each method of the embodiments of the disclosure when the computer program is run on the computer, which are not elaborated here, for the sake of brevity.

It may be appreciated by those of ordinary skill in the art that units and algorithm steps of each example described in combination with the embodiments disclosed here may be implemented by electronic hardware, or a combination of computer software and electronic hardware. Whether these functions are executed by hardware or software, depends on specific applications and design constraint conditions of the technical solutions. Professional technicians may use different methods in each specific application to implement the described functions, however, such implementation should not be considered as going beyond the scope of the disclosure.

It may be clearly understood by those skilled in the art that for the sake of convenience and brevity of descriptions, specific operation processes of the above systems, devices and units may refer to corresponding processes in the foregoing method embodiments, which are not elaborated here.

In several embodiments provided in the disclosure, it should be understood that the disclosed systems, devices and methods may be implemented in other ways. For example, the above device embodiments are illustrative only. For example, division of the units is only a logical function division. In an actual implementation, there may be other division modes. For example, multiple units or components may be combined or may be integrated into another system, or some features may be ignored or may not be executed. In another point, mutual coupling or direct coupling or communication connection as shown or discussed may be indirect coupling or communication connection through some interfaces, devices or units, and may be in electrical, mechanical or other forms.

The units described as separate components may be or may not be physically separated, and the components displayed as units may be or may not be physical units, that is, they may be located at one place, or may be distributed on multiple network units. Part or all of the units may be selected according to actual requirements, to achieve the purpose of the solutions of the embodiments.

Furthermore, each function unit in each embodiment of the disclosure may be integrated into one processing unit, or each unit may separately exist physically, or two or more units may be integrated into one unit.

When the functions are implemented in form of a software function unit and sold or used as an independent product, the functions may be stored in a computer-readable storage medium. Based on such understanding, the technical solutions of the disclosure substantially or parts making contributions to the related art or part of the technical solutions may be embodied in form of a software product, and the computer software product is stored in a storage medium, includes several instructions to enable a computer device (which may be a personal computer, a server, or a network device, etc.) to execute all or part of operations of the method described in each embodiment of the disclosure. The foregoing storage medium includes various media capable of storing program codes, such as a U disk, a mobile hard disk, a ROM, a RAM, a magnetic disk, or an optical disk, etc.

The above descriptions are only specific implementations of the disclosure, however, the scope of protection of the disclosure is not limited thereto. Variations or replacements easily conceived by any technician familiar with this technical field within the technical scope disclosed in the disclosure, should fall within the scope of protection of the disclosure. Therefore, the scope of protection of the disclosure shall be subjected to the scope of protection of the claims.

## Claims

1. A wireless communication method, comprising:
determining, by a terminal device, a target resource and/or a target frequency point for communication, according to first information, wherein the first information comprises identity (ID) information of the terminal device and/or a user type of the terminal device, and the terminal device obtains energy for communication through power harvesting.

2. The method of claim 1, wherein determining, by the terminal device, the target resource and/or the target frequency point for communication, according to the first information comprises:
determining a user group to which the terminal device belongs, according to the first information; and
determining the target resource and/or the target frequency point, according to the user group to which the terminal device belongs.

3. The method of claim 2, wherein the ID information of the terminal device comprises a plurality of bits, and determining the user group, to which the terminal device belongs, according to the first information comprises:
determining the user group, to which the terminal device belongs, according to values of part or all of the plurality of bits.

4. The method of claim 2, wherein the ID information of the terminal device comprises a plurality of bits, and determining the user group, to which the terminal device belongs, according to the first information comprises:
dividing part or all of the plurality of bits into a plurality of bit groups; and
determining the user group, to which the terminal device belongs, according to values of the plurality of bit groups.

5. The method of claim 2, wherein the user group to which the terminal device belongs is determined according to the user type of the terminal device, and wherein terminal devices with a same user type belong to a same user group.

6. The method of any one of claims 2 to 5, further comprising:
determining the user type of the terminal device according to the ID information of the terminal device.

7. The method of any one of claims 2 to 6, wherein determining the target resource and/or the target frequency point, according to the user group to which the terminal device belongs comprises:
determining the target resource according to the user group, to which the terminal device belongs, in combination with a mapping relationship between the user group and a resource group, wherein the resource group comprises at least one resource, and terminal devices in the user group are able to use resources in a corresponding resource group.

8. The method of claim 7, wherein determining the target resource according to the user group, to which the terminal device belongs, in combination with the mapping relationship between the user group and the resource group comprises:
determining a target resource group according to the user group to which the terminal device belongs and the mapping relationship; and
determining the target resource from the target resource group.

9. The method of claim 8, wherein determining the target resource from the target resource group comprises:
if the target resource group comprises one resource, determining the one resource as the target resource; or
if the target resource group comprises a plurality of resources, determining the target resource from the plurality of resources.

10. The method of claim 9, wherein determining the target resource from the plurality of resources comprises:
randomly selecting at least one resource from the plurality of resources, as the target resource; or
determining the target resource from the plurality of resources according to a preset rule; or
determining the target resource from the plurality of resources according to an anti-collision processing algorithm.

11. The method of any one of claims 7 to 10, wherein the mapping relationship between the user group and the resource group comprises a first mapping relationship between the user group and a frequency domain resource group, and wherein the frequency domain resource group comprises at least one frequency domain resource, and the target resource comprises at least one target frequency domain resource.

12. The method of claim 11, wherein the frequency domain resource is a minimum frequency domain resource unit required by the terminal device to perform back scattering communication.

13. The method of any one of claims 7 to 10, wherein the mapping relationship between the user group and the resource group comprises a second mapping relationship between the user group and a time domain resource group, and wherein the time domain resource group comprises at least one time domain resource, and the target resource comprises at least one target time domain resource.

14. The method of claim 13, wherein the time domain resource is a minimum time domain resource unit required by the terminal device to perform back scattering communication.

15. The method of any one of claims 7 to 10, wherein the mapping relationship between the user group and the resource group comprises a third mapping relationship between the user group and a time-frequency domain resource group, and wherein the time-frequency domain resource group comprises at least one time-frequency domain resource, and the target resource comprises at least one target time-frequency domain resource.

16. The method of claim 15, wherein the time-frequency domain resource is a minimum time-frequency domain resource unit required by the terminal device to perform back scattering communication.

17. The method of any one of claims 2 to 16, wherein determining the target resource and/or the target frequency point, according to the user group to which the terminal device belongs comprises:
determining a target frequency point group according to the user group, to which the terminal device belongs, in combination with a mapping relationship between the user group and a frequency point group; and
determining the target frequency point from the target frequency point group.

18. The method of claim 17, wherein determining the target frequency point from the target frequency point group comprises:
if the target frequency point group comprises one frequency point, determining the one frequency point as the target frequency point; or
if the target frequency point group comprises a plurality of frequency points, determining the target frequency point from the plurality of frequency points.

19. The method of claim 18, wherein determining the target frequency point from the plurality of frequency points comprises:
randomly selecting at least one frequency point from the plurality of frequency points, as the target frequency point; or
determining the target frequency point from the plurality of frequency points according to a preset rule; or
determining the target frequency point from the plurality of frequency points according to an anti-collision processing algorithm.

20. The method of any one of claims 1 to 19, further comprising:
receiving, by the terminal device, an energy supply signal at the target frequency point, to acquire energy for back scattering.

21. A wireless communication method, comprising:
determining, by a network device, a target resource and/or a target frequency point for communication performed by a terminal device, according to first information, wherein the first information comprises identity (ID) information of the terminal device and/or a user type of the terminal device, and the terminal device obtains energy for communication through power harvesting.

22. The method of claim 21, wherein determining, by the network device, the target resource and/or the target frequency point for communication performed by the terminal device, according to the first information comprises:
determining a user group to which the terminal device belongs, according to the first information; and
determining the target resource and/or the target frequency point, according to the user group to which the terminal device belongs.

23. The method of claim 22, wherein the ID information of the terminal device comprises a plurality of bits, and determining the user group, to which the terminal device belongs, according to the first information comprises:
determining the user group, to which the terminal device belongs, according to values of part or all of the plurality of bits.

24. The method of claim 22, wherein the ID information of the terminal device comprises a plurality of bits, and determining the user group, to which the terminal device belongs, according to the first information comprises:
dividing part or all of the plurality of bits into a plurality of bit groups; and
determining the user group, to which the terminal device belongs, according to values of the plurality of bit groups.

25. The method of claim 22, wherein the user group to which the terminal device belongs is determined according to the user type of the terminal device, and wherein terminal devices with a same user type belong to a same user group.

26. The method of any one of claims 22 to 25, further comprising:
determining the user type of the terminal device according to the ID information of the terminal device.

27. The method of any one of claims 22 to 26, wherein determining the target resource and/or the target frequency point, according to the user group to which the terminal device belongs comprises:
determining the target resource according to the user group, to which the terminal device belongs, in combination with a mapping relationship between the user group and a resource group, wherein the resource group comprises at least one resource, and terminal devices in the user group are able to use resources in a corresponding resource group.

28. The method of claim 27, wherein determining the target resource according to the user group, to which the terminal device belongs, in combination with the mapping relationship between the user group and the resource group comprises:
determining a target resource group according to the user group to which the terminal device belongs and the mapping relationship; and
determining the target resource from the target resource group.

29. The method of claim 28, wherein determining the target resource from the target resource group comprises:
if the target resource group comprises one resource, determining the one resource as the target resource; or
if the target resource group comprises a plurality of resources, determining the target resource from the plurality of resources.

30. The method of claim 29, wherein determining the target resource from the plurality of resources comprises:
randomly selecting at least one resource from the plurality of resources, as the target resource; or
determining the target resource from the plurality of resources according to a preset rule; or
determining the target resource from the plurality of resources according to an anti-collision processing algorithm.

31. The method of any one of claims 27 to 30, wherein the mapping relationship between the user group and the resource group comprises a first mapping relationship between the user group and a frequency domain resource group, and wherein the frequency domain resource group comprises at least one frequency domain resource, and the target resource comprises at least one target frequency domain resource.

32. The method of claim 31, wherein the frequency domain resource is a minimum frequency domain resource unit required by the terminal device to perform back scattering communication.

33. The method of any one of claims 27 to 30, wherein the mapping relationship between the user group and the resource group comprises a second mapping relationship between the user group and a time domain resource group, and wherein the time domain resource group comprises at least one time domain resource, and the target resource comprises at least one target time domain resource.

34. The method of claim 33, wherein the time domain resource is a minimum time domain resource unit required by the terminal device to perform back scattering communication.

35. The method of any one of claims 27 to 30, wherein the mapping relationship between the user group and the resource group comprises a third mapping relationship between the user group and a time-frequency domain resource group, and wherein the time-frequency domain resource group comprises at least one time-frequency domain resource, and the target resource comprises at least one target time-frequency domain resource.

36. The method of claim 35, wherein the time-frequency domain resource is a minimum time-frequency domain resource unit required by the terminal device to perform back scattering communication.

37. The method of any one of claims 22 to 36, wherein determining the target resource and/or the target frequency point, according to the user group to which the terminal device belongs comprises:
determining a target frequency point group according to the user group, to which the terminal device belongs, in combination with a mapping relationship between the user group and a frequency point group; and
determining the target frequency point from the target frequency point group.

38. The method of claim 37, wherein determining the target frequency point from the target frequency point group comprises:
if the target frequency point group comprises one frequency point, determining the one frequency point as the target frequency point; or
if the target frequency point group comprises a plurality of frequency points, determining the target frequency point from the plurality of frequency points.

39. The method of claim 38, wherein determining the target frequency point from the plurality of frequency points comprises:
randomly selecting at least one frequency point from the plurality of frequency points, as the target frequency point; or
determining the target frequency point from the plurality of frequency points according to a preset rule; or
determining the target frequency point from the plurality of frequency points according to an anti-collision processing algorithm.

40. The method of any one of claims 21 to 39, wherein the terminal device receives an energy supply signal at the target frequency point, to acquire energy for back scattering.

41. A terminal device, comprising:
a processing unit, configured to determine a target resource and/or a target frequency point for comm'unication, according to first information, wherein the first information comprises identity (ID) information of the terminal device and/or a user type of the terminal device, and the terminal device obtains energy for communication through power harvesting.

42. The terminal device of claim 41, wherein the processing unit is further configured to:
determine a user group to which the terminal device belongs, according to the first information; and
determine the target resource and/or the target frequency point, according to the user group to which the terminal device belongs.

43. The terminal device of claim 42, wherein the ID information of the terminal device comprises a plurality of bits, and the processing unit is further configured to:
determine the user group, to which the terminal device belongs, according to values of part or all of the plurality of bits.

44. The terminal device of claim 42, wherein the ID information of the terminal device comprises a plurality of bits, and the processing unit is further configured to:
divide part or all of the plurality of bits into a plurality of bit groups; and
determine the user group, to which the terminal device belongs, according to values of the plurality of bit groups.

45. The terminal device of claim 42, wherein the user group to which the terminal device belongs is determined according to the user type of the terminal device, and wherein terminal devices with a same user type belong to a same user group.

46. The terminal device of any one of claims 42 to 45, wherein the processing unit is further configured to:
determine the user type of the terminal device according to the ID information of the terminal device.

47. The terminal device of any one of claims 42 to 46, wherein the processing unit is further configured to:
determine the target resource according to the user group, to which the terminal device belongs, in combination with a mapping relationship between the user group and a resource group, wherein the resource group comprises at least one resource, and terminal devices in the user group are able to use resources in a corresponding resource group.

48. The terminal device of claim 47, wherein the processing unit is further configured to:
determine a target resource group according to the user group to which the terminal device belongs and the mapping relationship; and
determine the target resource from the target resource group.

49. The terminal device of claim 48, wherein the processing unit is further configured to:
if the target resource group comprises one resource, determine the one resource as the target resource; or
if the target resource group comprises a plurality of resources, determine the target resource from the plurality of resources.

50. The terminal device of claim 49, wherein the processing unit is further configured to:
randomly select at least one resource from the plurality of resources, as the target resource; or
determine the target resource from the plurality of resources according to a preset rule; or
determine the target resource from the plurality of resources according to an anti-collision processing algorithm.

51. The terminal device of any one of claims 47 to 50, wherein the mapping relationship between the user group and the resource group comprises a first mapping relationship between the user group and a frequency domain resource group, and wherein the frequency domain resource group comprises at least one frequency domain resource, and the target resource comprises at least one target frequency domain resource.

52. The terminal device of claim 51, wherein the frequency domain resource is a minimum frequency domain resource unit required by the terminal device to perform back scattering communication.

53. The terminal device of any one of claims 47 to 50, wherein the mapping relationship between the user group and the resource group comprises a second mapping relationship between the user group and a time domain resource group, and wherein the time domain resource group comprises at least one time domain resource, and the target resource comprises at least one target time domain resource.

54. The terminal device of claim 53, wherein the time domain resource is a minimum time domain resource unit required by the terminal device to perform back scattering communication.

55. The terminal device of any one of claims 47 to 50, wherein the mapping relationship between the user group and the resource group comprises a third mapping relationship between the user group and a time-frequency domain resource group, and wherein the time-frequency domain resource group comprises at least one time-frequency domain resource, and the target resource comprises at least one target time-frequency domain resource.

56. The terminal device of claim 55, wherein the time-frequency domain resource is a minimum time-frequency domain resource unit required by the terminal device to perform back scattering communication.

57. The terminal device of any one of claims 42 to 56, wherein the processing unit is further configured to:
determine a target frequency point group according to the user group, to which the terminal device belongs, in combination with a mapping relationship between the user group and a frequency point group; and
determine the target frequency point from the target frequency point group.

58. The terminal device of claim 57, wherein the processing unit is further configured to:
if the target frequency point group comprises one frequency point, determine the one frequency point as the target frequency point; or
if the target frequency point group comprises a plurality of frequency points, determine the target frequency point from the plurality of frequency points.

59. The terminal device of claim 58, wherein the processing unit is further configured to:
randomly select at least one frequency point from the plurality of frequency points, as the target frequency point; or
determine the target frequency point from the plurality of frequency points according to a preset rule; or
determine the target frequency point from the plurality of frequency points according to an anti-collision processing algorithm.

60. The terminal device of any one of claims 41 to 59, further comprising:
a communication unit, configured to receive an energy supply signal at the target frequency point, to acquire energy for back scattering.

61. A network device, comprising:
a processing unit, configured to determine a target resource and/or a target frequency point for communication performed by a terminal device, according to first information, wherein the first information comprises identity (ID) information of the terminal device and/or a user type of the terminal device, and the terminal device obtains energy for communication through power harvesting.

62. The network device of claim 61, wherein the processing unit is further configured to:
determine a user group to which the terminal device belongs, according to the first information; and
determine the target resource and/or the target frequency point, according to the user group to which the terminal device belongs.

63. The network device of claim 62, wherein the ID information of the terminal device comprises a plurality of bits, and the processing unit is further configured to:
determine the user group, to which the terminal device belongs, according to values of part or all of the plurality of bits.

64. The network device of claim 62, wherein the ID information of the terminal device comprises a plurality of bits, and the processing unit is further configured to:
divide part or all of the plurality of bits into a plurality of bit groups; and
determine the user group, to which the terminal device belongs, according to values of the plurality of bit groups.

65. The network device of claim 62, wherein the user group to which the terminal device belongs is determined according to the user type of the terminal device, and wherein terminal devices with a same user type belong to a same user group.

66. The network device of any one of claims 62 to 65, wherein the processing unit is further configured to:
determine the user type of the terminal device according to the ID information of the terminal device.

67. The network device of any one of claims 62 to 66, wherein the processing unit is further configured to:
determine the target resource according to the user group, to which the terminal device belongs, in combination with a mapping relationship between the user group and a resource group, wherein the resource group comprises at least one resource, and terminal devices in the user group are able to use resources in a corresponding resource group.

68. The network device of claim 67, wherein the processing unit is further configured to:
determine a target resource group according to the user group to which the terminal device belongs and the mapping relationship; and
determine the target resource from the target resource group.

69. The network device of claim 68, wherein the processing unit is further configured to:
if the target resource group comprises one resource, determine the one resource as the target resource; or
if the target resource group comprises a plurality of resources, determine the target resource from the plurality of resources.

70. The network device of claim 69, wherein the processing unit is further configured to:
randomly select at least one resource from the plurality of resources, as the target resource; or
determine the target resource from the plurality of resources according to a preset rule; or
determine the target resource from the plurality of resources according to an anti-collision processing algorithm.

71. The network device of any one of claims 67 to 70, wherein the mapping relationship between the user group and the resource group comprises a first mapping relationship between the user group and a frequency domain resource group, and wherein the frequency domain resource group comprises at least one frequency domain resource, and the target resource comprises at least one target frequency domain resource.

72. The network device of claim 71, wherein the frequency domain resource is a minimum frequency domain resource unit required by the terminal device to perform back scattering communication.

73. The network device of any one of claims 67 to 70, wherein the mapping relationship between the user group and the resource group comprises a second mapping relationship between the user group and a time domain resource group, and wherein the time domain resource group comprises at least one time domain resource, and the target resource comprises at least one target time domain resource.

74. The network device of claim 73, wherein the time domain resource is a minimum time domain resource unit required by the terminal device to perform back scattering communication.

75. The network device of any one of claims 67 to 70, wherein the mapping relationship between the user group and the resource group comprises a third mapping relationship between the user group and a time-frequency domain resource group, and wherein the time-frequency domain resource group comprises at least one time-frequency domain resource, and the target resource comprises at least one target time-frequency domain resource.

76. The network device of claim 75, wherein the time-frequency domain resource is a minimum time-frequency domain resource unit required by the terminal device to perform back scattering communication.

77. The network device of any one of claims 62 to 76, wherein the processing unit is further configured to:
determine a target frequency point group according to the user group, to which the terminal device belongs, in combination with a mapping relationship between the user group and a frequency point group; and
determine the target frequency point from the target frequency point group.

78. The network device of claim 77, wherein the processing unit is further configured to:
if the target frequency point group comprises one frequency point, determine the one frequency point as the target frequency point; or
if the target frequency point group comprises a plurality of frequency points, determine the target frequency point from the plurality of frequency points.

79. The network device of claim 78, wherein the processing unit is further configured to:
randomly select at least one frequency point from the plurality of frequency points, as the target frequency point; or
determine the target frequency point from the plurality of frequency points according to a preset rule; or
determine the target frequency point from the plurality of frequency points according to an anti-collision processing algorithm.

80. The network device of any one of claims 61 to 79, wherein the terminal device receives an energy supply signal at the target frequency point, to acquire energy for back scattering.

81. A terminal device, comprising: a memory, configured to store a computer program; and a processor, configured to call and run the computer program stored in the memory, to execute the method of any one of claims 1 to 20.

82. A chip, comprising: a processor, configured to call and run a computer program from a memory, so that a device on which a chip is mounted executes the method of any one of claims 1 to 20.

83. A computer-readable storage medium having stored thereon a computer program, wherein the computer program enables a computer to execute the method of any one of claims 1 to 20.

84. A computer program product, comprising computer program instructions, wherein the computer program instructions enable a computer to execute the method of any one of claims 1 to 20.

85. A computer program, enabling a computer to execute the method of any one of claims 1 to 20.

86. A network device, comprising: a memory, configured to store a computer program; and a processor, configured to call and run the computer program stored in the memory, to execute the method of any one of claims 21 to 40.

87. A chip, comprising: a processor, configured to call and run a computer program from a memory to enable a device on which a chip is mounted executes the method of any one of claims 21 to 40.

88. A computer-readable storage medium having stored thereon a computer program, wherein the computer program enables a computer to execute the method of any one of claims 21 to 40.

89. A computer program product, comprising computer program instructions, wherein the computer program instructions enable a computer to execute the method of any one of claims 21 to 40.

90. A computer program, enabling a computer to execute the method of any one of claims 21 to 40.
